# EUROPEAN PATENT APPLICATION

(11) **EP 4 297 444 A1**
(43) Date of publication of application: **27.12.2023**
(21) Application number: 22766218.6
(22) Date of filing: 03.03.2022
(51) Int. Cl.: H04W 4/70

(54) **METHOD FOR DETERMINING SIDELINK DRX CONFIGURATION, AND COMMUNICATION APPARATUS**

(30) Priority: 09.03.2021 CN 202110252910; 31.03.2021 CN 202110351627; 23.09.2021 CN 202111116713
(71) Applicant: Huawei Technologies Co., Ltd., Shenzhen, Guangdong 518129 (CN)
(72) Inventor: CAI, Yu, Shenzhen, Guangdong 518129 (CN); XU, Haibo, Shenzhen, Guangdong 518129 (CN)
(74) Representative: Thun, Clemens
(86) International application number: PCT/CN2022/079105
(87) International publication number: WO 2022/188692

(57) **Abstract**

This application provides a method for determining a sidelink DRX configuration and a communication apparatus. The method includes: determining at least two PQIs or sidelink QoS profiles corresponding to a service of a terminal, then determining at least two sidelink DRX configurations corresponding to the at least two PQIs or sidelink QoS profiles, and then determining a sidelink DRX configuration for use based on the at least two sidelink DRX configurations. In this way, an appropriate sidelink DRX configuration can be determined for use, to help improve efficiency of communication between terminals. In addition, when a terminal on a transmitter side and a terminal on a receiver side each determine a sidelink DRX configuration for use according to the method, both the terminal on the transmitter side and the terminal on the receiver side use a same sidelink DRX configuration. Therefore, sidelink active times of the terminal on the transmitter side and the terminal on the receiver side can be aligned.

## Description

This application claims priority to Chinese Patent Application No. 202110252910.9, filed with the China National Intellectual Property Administration on March 9, 2021 and entitled "UE2NW RELAY COMMUNICATION METHOD, UE, AND NETWORK DEVICE", claims priority to Chinese Patent Application No. 202110351627.1, filed with the China National Intellectual Property Administration on March 31, 2021 and entitled "METHOD FOR DETERMINING SIDELINK DRX CONFIGURATION AND COMMUNICATION APPARATUS", and claims priority to Chinese Patent Application No. 202111116713.0, filed with the China National Intellectual Property Administration on September 23, 2021 and entitled "METHOD FOR DETERMINING SIDELINK DRX CONFIGURATION AND COMMUNICATION APPARATUS", which are incorporated herein by reference in their entireties.

### TECHNICAL FIELD

This application relates to the field of wireless communication technologies, and in particular, to a method for determining a sidelink DRX configuration and a communication apparatus.

### BACKGROUND

The 3rd generation partnership project (3rd generation partnership project, 3GPP) always develops a sidelink (sidelink, SL) standard starting from long term evolution (long term evolution, LTE), to implement direct communication between terminals in various application scenarios.

During communication between terminals, a sidelink discontinuous reception (discontinuous reception, DRX) configuration for use needs to be determined, to determine sidelink active times of the terminals based on the sidelink DRX configuration.

However, currently, there is no good method for determining a sidelink DRX configuration.

### SUMMARY

This application provides a method for determining a sidelink DRX configuration and a communication apparatus, to select an appropriate sidelink DRX configuration for use, so that efficiency of communication between terminals is improved.

According to a first aspect, an embodiment of this application provides a method for determining a sidelink DRX configuration. The method may be performed by a terminal or a module used in a terminal. The method includes: determining at least two PQIs or sidelink QoS profiles corresponding to a service of a terminal; determining at least two sidelink DRX configurations corresponding to the at least two PQIs or sidelink QoS profiles, where each sidelink DRX configuration indicates one or more sidelink DRX parameters; and determining a sidelink DRX configuration for use based on the at least two sidelink DRX configurations.

According to the solution, the at least two PQIs or sidelink QoS profiles corresponding to the service of the terminal are determined, then the at least two sidelink DRX configurations corresponding to the at least two PQIs or sidelink QoS profiles are determined, and then the sidelink DRX configuration for use is determined based on the at least two sidelink DRX configurations. In this way, an appropriate sidelink DRX configuration can be determined for use, to help improve efficiency of communication between terminals. In addition, when a terminal on a transmitter side and a terminal on a receiver side each determine a sidelink DRX configuration for use according to the method, both the terminal on the transmitter side and the terminal on the receiver side use a same sidelink DRX configuration. Therefore, sidelink active times of the terminal on the transmitter side and the terminal on the receiver side can be aligned.

In a possible implementation, the sidelink DRX configuration for use is a first sidelink DRX configuration, and the first sidelink DRX configuration is one of the at least two sidelink DRX configurations.

According to the solution, one sidelink DRX configuration is selected from the at least two sidelink DRX configurations for use. Because only one sidelink DRX configuration is used, power consumption of the terminal can be reduced.

In a possible implementation, a value of a first parameter in the first sidelink DRX configuration is a smallest value or a largest value in values of first parameters in the at least two sidelink DRX configurations. The first parameter is any one of the following parameters: a value of an sl-DRX-OnDurationTimer, a value of an sl-DRX-InactivityTimer, a value of an sl-DRX-HARQ-RTT-Timer, a value of an sl-DRX-RetransmissionTimer, a value of an SL DRX cycle, a value of an sl-DRX-startOffset, or a value of an sl-DRX-slotOffset.

In a possible implementation, in a case in which values of first parameters in a plurality of sidelink DRX configurations in the at least two sidelink DRX configurations are smallest values or largest values, when a value of a second parameter in only one sidelink DRX configuration in the plurality of sidelink DRX configurations is the smallest or the largest, the sidelink DRX configuration is determined as the first sidelink DRX configuration; or when values of second parameters in a plurality of sidelink DRX configurations in the plurality of sidelink DRX configurations are the smallest or the largest, one of the plurality of sidelink DRX configurations is determined as the first sidelink DRX configuration.

In a possible implementation, in a case in which values of first parameters in a plurality of sidelink DRX configurations in the at least two sidelink DRX configurations are smallest values or largest values, a sidelink DRX configuration positioned first or last in a sidelink DRX configuration list is selected as the first sidelink DRX configuration from the plurality of sidelink DRX configurations.

In a possible implementation, in a case in which values of first parameters in a plurality of sidelink DRX configurations in the at least two sidelink DRX configurations are smallest values or largest values, a sidelink DRX configuration corresponding to a PQI with a smallest or largest value is selected as the first sidelink DRX configuration from the plurality of sidelink DRX configurations.

In a possible implementation, in a case in which values of first parameters in a plurality of sidelink DRX configurations in the at least two sidelink DRX configurations are smallest values or largest values, a sidelink DRX configuration corresponding to a PQI with a smallest or largest index is selected as the first sidelink DRX configuration from the plurality of sidelink DRX configurations; or a sidelink DRX configuration corresponding to a sidelink QoS profile with a smallest or largest index is selected as the first sidelink DRX configuration from the plurality of sidelink DRX configurations.

In a possible implementation, the first sidelink DRX configuration is determined based on at least one of the following parameters: positions of the at least two sidelink DRX configurations separately in a sidelink DRX configuration list, values of PQIs respectively corresponding to the at least two sidelink DRX configurations, indexes of sidelink QoS profiles respectively corresponding to the at least two sidelink DRX configurations, or indexes of PQIs respectively corresponding to the at least two sidelink DRX configurations.

In a possible implementation, the first sidelink DRX configuration is generated based on the at least two sidelink DRX configurations, and a value of a parameter in the first sidelink DRX configuration comes from one or more of the at least two sidelink DRX configurations.

According to the solution, one sidelink DRX configuration is generated based on the at least two sidelink DRX configurations for use. Because only one sidelink DRX configuration is used, power consumption of the terminal can be reduced. In addition, because the sidelink DRX configuration for use is regenerated, flexibility of sidelink DRX configuration selection can be increased.

In a possible implementation, a value of a first parameter included in the first sidelink DRX configuration is a smallest value or a largest value in values of first parameters respectively included in the at least two sidelink DRX configurations.

In a possible implementation, the sidelink DRX configurations for use are the at least two sidelink DRX configurations.

According to the solution, all the at least two sidelink DRX configurations serve as the sidelink DRX configurations for use. Because a plurality of sidelink DRX configurations are used, a sidelink active time of the terminal can be increased, a success rate of communication between terminals can be increased, and communication efficiency can be improved.

In a possible implementation, each of the at least two sidelink DRX configurations includes duration of one or more of the following timers: an sl-DRX-onDurationTimer, an sl-DRX-inactivityTimer, an sl-DRX-HARQ-RTT-Timer, or an sl-DRX-RetransmissionTimer. A sidelink active time corresponding to the terminal includes one or a union set of the following plurality of running times: a running time of the sl-DRX-onDurationTimer corresponding to each sidelink DRX configuration, a running time of the sl-DRX-inactivityTimer corresponding to each sidelink DRX configuration, or a running time of the sl-DRX-RetransmissionTimer corresponding to each sidelink DRX configuration.

In a possible implementation, each of the at least two sidelink DRX configurations includes duration of one or more of the following timers: an sl-DRX-onDurationTimer, an sl-DRX-inactivityTimer, an sl-DRX-HARQ-RTT-Timer, or an sl-DRX-RetransmissionTimer. A sidelink active time corresponding to the terminal includes one or a union set of the following plurality of running times: a running time of the sl-DRX-onDurationTimer corresponding to each sidelink DRX configuration, a running time of a first sl-DRX-inactivityTimer corresponding to a second sidelink DRX configuration, or a running time of a first sl-DRX-RetransmissionTimer corresponding to a third sidelink DRX configuration. The second sidelink DRX configuration and the third sidelink DRX configuration are separately one of the at least two sidelink DRX configurations.

In a possible implementation, a value of the first sl-DRX-inactivityTimer is a smallest value or a largest value in values of the sl-DRX-inactivityTimers respectively corresponding to the at least two sidelink DRX configurations; and/or a value of the first sl-DRX-RetransmissionTimer is a smallest value or a largest value in values of the sl-DRX-RetransmissionTimers respectively corresponding to the at least two sidelink DRX configurations.

According to a second aspect, an embodiment of this application provides a method for determining a sidelink DRX configuration. The method may be performed by a terminal or a module used in a terminal. The method includes: obtaining configuration information, where the configuration information includes an index of a PQI corresponding to at least one sidelink DRX configuration; and determining, based on an index of a first PQI and the index of the PQI corresponding to the at least one sidelink DRX configuration, a first sidelink DRX configuration corresponding to the index of the first PQI.

According to the solution, a terminal may determine an SL DRX configuration corresponding to each PQI. In addition, because the configuration information carries an index of a PQI corresponding to each sidelink DRX configuration instead of carrying a PQI, signaling overheads and storage overheads can be reduced.

In a possible implementation, the method includes: determining the first PQI corresponding to the terminal; and determining the index of the first PQI based on the first PQI.

In a possible implementation, in a case in which the PQI is a standardized PQI, the index of the PQI is a value of the standardized PQI; or the index of the PQI is an index of a sidelink QoS profile including the standardized PQI.

In a possible implementation, in a case in which the PQI is a standardized PQI, at least one non-standardized PQI is obtained. Each non-standardized PQI corresponds to one piece of indication information, and the indication information indicates a standardized PQI corresponding to a same sidelink DRX configuration as the non-standardized PQI; or each non-standardized PQI corresponds to one default sidelink DRX configuration; or each non-standardized PQI corresponds to one common sidelink DRX configuration.

In a possible implementation, in a case in which the PQI is a non-standardized PQI, the index of the PQI is an index of a sidelink QoS profile including the non-standardized PQI; or the index of the PQI is an index of the non-standardized PQI included in a sidelink RB configuration; or the index of the PQI is indicated by an index of a sidelink RB configuration corresponding to a sidelink QoS profile including the non-standardized PQI and an index of the non-standardized PQI in the sidelink RB configuration.

According to a third aspect, an embodiment of this application provides a method for determining a sidelink DRX configuration. The method may be performed by a terminal or a module used in a terminal. The method includes: obtaining configuration information, where the configuration information includes an index of a sidelink QoS profile corresponding to at least one sidelink DRX configuration; and determining, based on an index of a first sidelink QoS profile and the index of the sidelink QoS profile corresponding to the at least one sidelink DRX configuration, a first sidelink DRX configuration corresponding to the index of the first sidelink QoS profile.

According to the solution, a terminal may determine an SL DRX configuration corresponding to each sidelink QoS profile. In addition, because the configuration information carries an index of a sidelink QoS profile corresponding to each sidelink DRX configuration instead of carrying a sidelink QoS profile, signaling overheads and storage overheads can be reduced.

In a possible implementation, the method includes: determining the first sidelink QoS profile corresponding to the terminal; and determining the index of the first sidelink QoS profile based on the first sidelink QoS profile.

In a possible implementation, the index of the sidelink QoS profile is indicated by a position of the sidelink QoS profile in sidelink QoS profiles corresponding to a sidelink RB configuration list; or the index of the sidelink QoS profile is indicated by an index of a sidelink RB configuration corresponding to the sidelink QoS profile and a position of the sidelink QoS profile in sidelink QoS profiles corresponding to the sidelink RB configuration.

According to a fourth aspect, an embodiment of this application provides a method for determining a sidelink DRX configuration. The method may be performed by a terminal or a module used in a terminal. The method includes: obtaining configuration information, where the configuration information includes an index of a sidelink RB configuration corresponding to at least one sidelink DRX configuration, and each sidelink RB configuration corresponds to at least one PQI; and determining, based on a first PQI and the index of the sidelink RB configuration corresponding to the at least one sidelink DRX configuration, a first sidelink DRX configuration corresponding to the first PQI.

According to the solution, a terminal may determine an SL DRX configuration corresponding to each PQI. In addition, because the configuration information carries an index of a sidelink RB configuration corresponding to each sidelink DRX configuration instead of carrying a sidelink RB configuration, signaling overheads and storage overheads can be reduced.

In a possible implementation, the method includes: determining an index of a first sidelink RB configuration corresponding to the first PQI; and determining, based on the index of the first sidelink RB configuration and the index of the sidelink RB configuration corresponding to the at least one sidelink DRX configuration, the first sidelink DRX configuration corresponding to the index of the first sidelink RB configuration.

In a possible implementation, the index of the first sidelink RB configuration is indicated by a position of the first sidelink RB configuration in a sidelink RB configuration list.

According to a fifth aspect, an embodiment of this application provides a method for determining a sidelink DRX configuration. The method may be performed by a terminal or a module used in a terminal. The method includes: obtaining configuration information, where the configuration information includes an index of a sidelink RB configuration corresponding to at least one sidelink DRX configuration, and each sidelink RB configuration corresponds to at least one sidelink QoS profile; and determining, based on a first sidelink QoS profile and the index of the sidelink RB configuration corresponding to the at least one sidelink DRX configuration, a first sidelink DRX configuration corresponding to the first sidelink QoS profile.

According to the solution, a terminal may determine an SL DRX configuration corresponding to each sidelink QoS profile. In addition, because the configuration information carries an index of a sidelink RB configuration corresponding to each sidelink DRX configuration instead of carrying a sidelink RB configuration, signaling overheads and storage overheads can be reduced.

In a possible implementation, the method includes: determining an index of a first sidelink RB configuration corresponding to the first sidelink QoS profile; and determining, based on the index of the first sidelink RB configuration and the index of the sidelink RB configuration corresponding to the at least one sidelink DRX configuration, the first sidelink DRX configuration corresponding to the index of the first sidelink RB configuration.

In a possible implementation, the index of the first sidelink RB configuration is indicated by a position of the first sidelink RB configuration in a sidelink RB configuration list.

According to a sixth aspect, an embodiment of this application provides a communication apparatus, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the implementations in the first aspect to the fifth aspect by using a logic circuit or by executing code instructions.

According to a seventh aspect, an embodiment of this application provides a communication apparatus, including a processor coupled to a memory. The processor is configured to invoke a program stored in the memory, to perform the method in any one of the implementations in the first aspect to the fifth aspect. The memory may be located inside or outside the apparatus. In addition, there may be one or more processors.

According to an eighth aspect, an embodiment of this application provides a communication apparatus, including a processor and a memory. The memory stores computer instructions. When the communication apparatus runs, the processor executes the computer instructions stored in the memory, so that the communication apparatus performs the method in any one of the implementations in the first aspect to the fifth aspect.

According to a ninth aspect, an embodiment of this application provides a communication apparatus. The apparatus may be a terminal or a module used in a terminal. The apparatus has a function of implementing the method in any one of the implementations in the first aspect to the fifth aspect. The function may be implemented by hardware, or may be implemented by hardware executing corresponding software. The hardware or the software includes one or more modules corresponding to the function.

According to a tenth aspect, an embodiment of this application provides a communication apparatus, including a module configured to perform the method in any one of the implementations in the first aspect to the fifth aspect.

According to an eleventh aspect, an embodiment of this application provides a terminal, configured to perform the method in any one of the implementations in the first aspect to the fifth aspect.

According to a twelfth aspect, an embodiment of this application further provides a computer program product. The computer program product includes a computer program. When the computer program is run by a processor, the method in any one of the implementations in the first aspect to the fifth aspect is implemented.

According to a thirteenth aspect, an embodiment of this application further provides a computer-readable storage medium. The storage medium stores a computer program or instructions. When the computer program or the instructions is/are executed by a processor, the method in any one of the implementations in the first aspect to the fifth aspect is implemented.

### BRIEF DESCRIPTION OF DRAWINGS

FIG. 1 is a schematic diagram of an architecture of a communication system to which an embodiment of this application is applied;
FIG. 2 is a schematic diagram of a running time of an sl-DRX-OnDurationTimer;
FIG. 3 is a schematic diagram of a running time of an sl-DRX-InactivityTimer;
FIG. 4 is a schematic diagram of a running time of an sl-DRX-RetransmissionTimer;
FIG. 5 is a schematic diagram of a running time of an sl-DRX-HARQ-RTT-Timer;
FIG. 6 is a schematic diagram of a method for determining an SL DRX configuration according to an embodiment of this application;
FIG. 7 is a schematic diagram of a method for determining an SL DRX configuration according to an embodiment of this application;
FIG. 8 is a schematic diagram of running times of sl-DRX-OnDurationTimers corresponding to different SL DRX configurations;
FIG. 9 is a schematic diagram of running times of sl-DRX-InactivityTimers corresponding to different SL DRX configurations and a running time of an sl-DRX-OnDurationTimer;
FIG. 10 is a schematic diagram of running times of sl-DRX-RetransmissionTimers corresponding to different SL DRX configurations and a running time of an sl-DRX-OnDurationTimer;
FIG. 11 is a schematic diagram of a method for determining an SLDRX configuration according to an embodiment of this application;
FIG. 12 is a schematic diagram of running times of sl-DRX-OnDurationTimers corresponding to different SL DRX configurations and a running time of a first sl-DRX-InactivityTimer;
FIG. 13 is a schematic diagram of running times of sl-DRX-OnDurationTimers corresponding to different SL DRX configurations and a running time of a first sl-DRX-RetransmissionTimer;
FIG. 14 is a schematic diagram of running times of an sl-DRX-OnDurationTimer and an sl-DRX-InactivityTimer that correspond to different SL DRX configurations;
FIG. 15 is a schematic diagram of running times of an sl-DRX-OnDurationTimer and an sl-DRX-InactivityTimer that correspond to different SL DRX configurations;
FIG. 16 is a schematic diagram of a method for determining an SL DRX configuration according to an embodiment of this application;
FIG. 17 is a schematic diagram of a method for determining an SL DRX configuration according to an embodiment of this application;
FIG. 18(a) is a schematic diagram of a method for determining a DRX configuration according to an embodiment of this application;
FIG. 18(b) is a schematic diagram of a method for determining a DRX configuration according to an embodiment of this application;
FIG. 19 is a schematic diagram of a communication apparatus according to an embodiment of this application; and
FIG. 20 is a schematic diagram of a communication apparatus according to an embodiment of this application.

### DESCRIPTION OF EMBODIMENTS

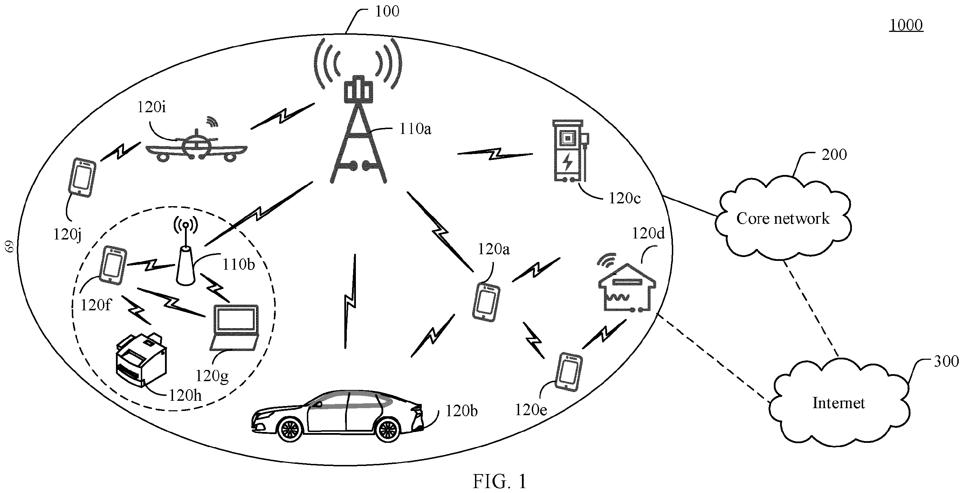

FIG. 1 is a schematic diagram of an architecture of a communication system to which embodiments of this application is applied. As shown in FIG. 1, the communication system 1000 includes a radio access network 100 and a core network 200. Optionally, the communication system 1000 may further include the Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network device in a wireless or wired manner. The core network device and the radio access network device may be different physical devices that are independent of each other, or a function of a core network device and a logical function of the radio access network device may be integrated into a same physical device, or some functions of a core network device and some functions of the radio access network device may be integrated into one physical device. A wired or wireless manner may be used for connection between terminals and between radio access network devices. FIG. 1 is only a schematic diagram. The communication system may further include another network device, for example, may further include a radio relay device and a radio backhaul device that are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system or an access node in a wireless fidelity (wireless fidelity, Wi-Fi) system, or the like; or may be a module or unit that completes some functions of a base station, for example, may be a central unit (central unit, CU) or a distributed unit (distributed unit, DU). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. In embodiments of this application, an example in which a base station serves as a radio access network device is used for description.

The terminal may also be referred to as a terminal device, user equipment (user equipment, UE), a mobile station, a mobile terminal, or the like. The terminal may be widely applied to various scenarios such as device-to-device (device-to-device, D2D), vehicle-to-everything (vehicle to everything, V2X) communication, machine type communication (machine-type communication, MTC), an internet of things (internet of things, IoT), virtual reality, augmented reality, industrial control, self-driving, telemedicine, a smart grid, smart furniture, a smart office, smart wear, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal are not limited in embodiments of this application.

In embodiments of this application, sidelink (sidelink, SL) communication may be performed between terminals. Different terminals may correspond to a same serving cell or different serving cells.

Abase station and a terminal may be located at a fixed position, or may be mobile. The base station and the terminal each may be deployed on land, including an indoor or outdoor device, a handheld device, or a vehicle-mounted device; or may be deployed on water; or may be deployed on an airplane, a balloon, or a satellite in air. Application scenarios of the base station and the terminal are not limited in embodiments of this application.

Roles of the base station and the terminal may be relative. For example, the helicopter or the uncrewed aerial vehicle 120i in FIG. 1 may be configured as a mobile base station, and for the terminal 120j accessing the radio access network 100 through 120i, the terminal 120i is a base station. However, for the base station 110a, 120i is a terminal. To be specific, communication between 110a and 120i is performed according to a radio air interface protocol. Certainly, communication between 110a and 120i may alternatively be performed according to a protocol of an interface between base stations. In this case, for 110a, 120i is also a base station. Therefore, both the base station and the terminal may be collectively referred to as a communication apparatus. 110a and 110b in FIG. 1 may be referred to as a communication apparatus having a base station function, and 120a to 120j in FIG. 1 may be referred to as a communication apparatus having a terminal function.

For ease of understanding, the following first explains and describes some nouns or terms used in embodiments of this application.

### 1. Sidelink communication

The sidelink communication is also referred to as SL communication, sidelink communication, sidelink communication, sidelink communication, or sidelink communication.

The sidelink communication means that two adjacent terminals directly communicate with each other without requiring any network node. The sidelink communication by using a new radio (new radio, NR) technology may be referred to as NR sidelink communication.

The sidelink communication is performed between a source (source) terminal and a destination (destination) terminal. The source terminal is also referred to as a terminal on a transmitter side, and the destination terminal is also referred to as a terminal on a receiver side. The source terminal may be identified by using a source layer-2 identifier (source layer-2 ID), and the destination terminal may be identified by using a destination layer-2 identifier (destination layer-2 ID). The terminal on the transmitter side is a source of sidelink communication (or a media access control (media access control, MAC) protocol data unit (protocol data unit, PDU)), and the terminal on the receiver side is a destination of sidelink communication (or a MAC PDU).

When a terminal serves as the terminal on the transmitter side, a layer-2 ID of the terminal is a source layer-2 ID, and a layer-2 ID of the terminal on the receiver side is a destination layer-2 ID. When a terminal serves as the terminal on the receiver side, a layer-2 ID of the terminal is a destination layer-2 ID, and a layer-2 ID of the terminal on the transmitter side is a source layer-2 ID.

It should be noted that, in an actual application, the source layer-2 ID may also be referred to as a source ID for short, and the destination layer-2 ID may also be referred to as a destination ID for short.

The source layer-2 ID is allocated by the terminal on the transmitter side.

For sidelink unicast communication, the destination layer-2 ID depends on the terminal on the receiver side. In a process of establishing a PC5 unicast link (PC5 unicast link), layer-2 IDs are exchanged between two terminals and are used for subsequent communication. A terminal described below may be a terminal identified by using a layer-2 ID. The layer-2 ID is allocated to the terminal, and the layer-2 ID is used in the sidelink communication. A PC5-RRC connection (PC5-RRC connection) is a logical connection between a source and destination pair (source and destination pair). After the PC5 unicast link (PC5 unicast link) is established, a corresponding PC5-RRC connection is established. There is a one-to-one correspondence between the PC5-RRC connection and the PC5 unicast link.

For sidelink multicast communication, when a V2X/D2D application layer of the terminal on the transmitter side or the receiver side may provide group identifier information (group identifier information), the terminal on the transmitter side or the receiver side may determine a destination layer-2 ID based on the group identifier information. When a V2X/D2D application layer of the terminal on the transmitter side or the receiver side does not provide group identifier information, the terminal on the transmitter side or the receiver side may determine a destination layer-2 ID based on a current V2X/D2D service and a mapping relationship between a V2X/D2D service and the destination layer-2 ID.

For sidelink broadcast communication, the terminal on the transmitter side or the receiver side may determine a destination layer-2 ID based on a current V2X/D2D service and a mapping relationship between a V2X/D2D service and the destination layer-2 ID.

### 2. SL DRX

To reduce power consumption of a terminal, an SL DRX is introduced in an NR SL. In the SL DRX, four types of timers (Timers) are currently introduced: a sidelink DRX on-duration timer (sl-DRX-OnDurationTimer), a sidelink DRX inactivity timer (sl-DRX-InactivityTimer), a sidelink DRX hybrid automatic repeat request round trip time timer (sl-DRX-HARQ-RTT-Timer) and a sidelink DRX retransmission timer (sl-DRX-RetransmissionTimer). HARQ is an abbreviation for hybrid automatic repeat request (hybrid automatic repeat request), and RTT is an abbreviation for round trip time (round trip time).

The sl-DRX-OnDurationTimer indicates duration generated after a start position of an SL DRX cycle. The sl-DRX-InactivityTimer indicates duration generated after a piece of sidelink control information (sidelink control information, SCI) indicating a new SL transmission. The sl-DRX-RetransmissionTimer indicates maximum duration generated until a piece of SCI indicating an SL retransmission is received. The sl-DRX-HARQ-RTT-Timer indicates minimum duration generated before a piece of SCI indicating an SL retransmission is expected to be received.

When an SL DRX is configured or activated, a terminal monitors a PSCCH within an SL active time (SL active time), or monitors a PSCCH and a physical sidelink shared channel (physical sidelink shared channel, PSSCH) within an SL active time, or monitors a PSCCH and second stage SCI on a PSSCH within an SL active time, and does not perform monitoring at a time other than the SL active time. Therefore, power consumption of the terminal can be reduced. Monitoring the PSCCH and the second stage SCI on the PSSCH may also be understood as monitoring SCI. The SCI includes first stage SCI and the second stage SCI, the first stage SCI is carried on the PSCCH, and the second stage SCI is carried on the PSSCH.

The SL active time includes any one or a union set of the following plurality of running times: a running time of the sl-DRX-OnDurationTimer, a running time of the sl-DRX-InactivityTimer, or a running time of the sl-DRX-RetransmissionTimer. To be specific, the SL active time includes any one of the following:
(1) a running time of the sl-DRX-OnDurationTimer;
(2) a running time of the sl-DRX-InactivityTimer;
(3) a running time of the sl-DRX-RetransmissionTimer;
(4) a union set of a running time of the sl-DRX-OnDurationTimer and a running time of the sl-DRX-InactivityTimer;
(5) a union set of a running time of the sl-DRX-InactivityTimer and a running time of the sl-DRX-RetransmissionTimer;
(6) a union set of a running time of the sl-DRX-OnDurationTimer and a running time of the sl-DRX-RetransmissionTimer; or
(7) a union set of a running time of the sl-DRX-OnDurationTimer, a running time of the sl-DRX-InactivityTimer, and a running time of the sl-DRX-RetransmissionTimer.

The following describes running times of the foregoing different timers with reference to the accompanying drawings.

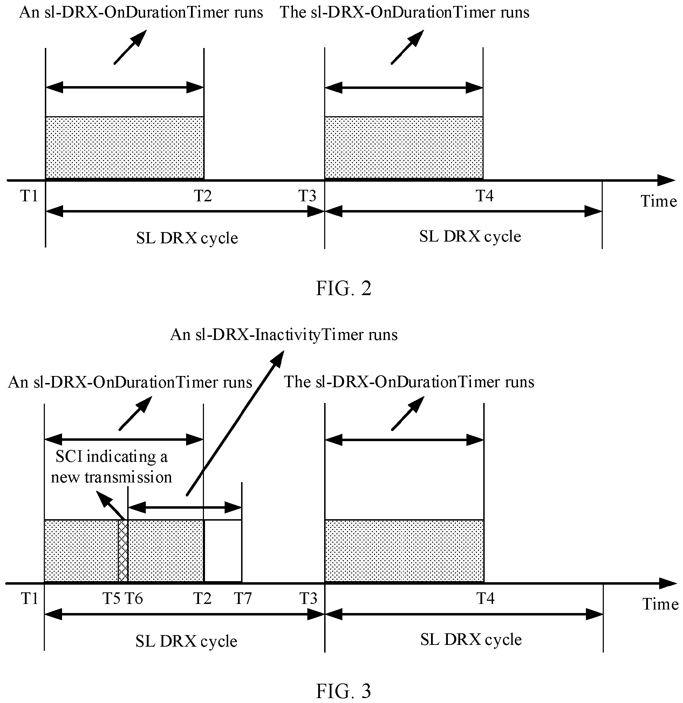

FIG. 2 is a schematic diagram of a running time of the sl-DRX-OnDurationTimer. The sl-DRX-OnDurationTimer is started and stopped periodically. The sl-DRX-OnDurationTimer keeps running within duration in each SL DRX cycle. The SL active time includes a running time of the sl-DRX-OnDurationTimer. FIG. 2 is used as an example. The SL active time includes duration between T1 and T2 and duration between T3 and T4.

FIG. 3 is a schematic diagram of a running time of the sl-DRX-InactivityTimer. The sl-DRX-InactivityTimer is started after SCI indicating a new transmission is received. In FIG. 3, a terminal receives, at a moment T5 within a running time of the sl-DRX-OnDurationTimer, a piece of SCI indicating a new transmission, and the terminal parses the SCI to learn that the SCI indicates the new transmission. In this case, the terminal starts the sl-DRX-InactivityTimer at a moment T6, and a running time of the sl-DRX-InactivityTimer may be indicated by an SL DRX configuration. In an example in FIG. 3, the running time of the sl-DRX-InactivityTimer includes duration between T6 and T7. It can be learned that the running time of the sl-DRX-InactivityTimer and the running time of the sl-DRX-OnDurationTimer may overlap. The SL active time includes the running time of the sl-DRX-OnDurationTimer and the running time of the sl-DRX-InactivityTimer. FIG. 3 is used as an example. The SL active time includes duration between T1 and T7 and duration between T3 and T4.

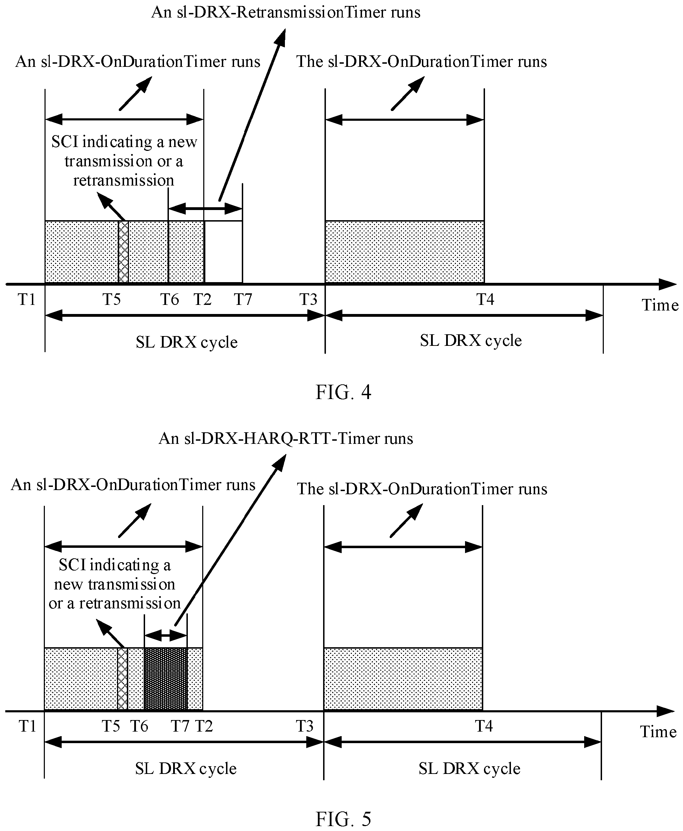

FIG. 4 is a schematic diagram of a running time of the sl-DRX-RetransmissionTimer. In an example in FIG. 4, the sl-DRX-RetransmissionTimer is started at a moment T6. The moment T6 may be a timeout moment of the sl-DRX-HARQ-RTT-Timer, or may be a first symbol generated after an end of a PSSCH scheduled by SCI, or may be a first symbol generated after an end of HARQ feedback for data scheduled by SCI, where the SCI herein indicates a new transmission or a retransmission. A running time of the sl-DRX-RetransmissionTimer may be indicated by an SL DRX configuration. In the example in FIG. 4, the running time of the sl-DRX-RetransmissionTimer includes duration between T6 and T7. It can be learned that the running time of the sl-DRX-RetransmissionTimer and a running time of the sl-DRX-OnDurationTimer may overlap. The SL active time includes the running time of the sl-DRX-OnDurationTimer and the running time of the sl-DRX-RetransmissionTimer. FIG. 4 is used as an example. The SL active time includes duration between T1 and T7 and duration between T3 and T4.

FIG. 5 is a schematic diagram of a running time of the sl-DRX-HARQ-RTT-Timer. In an example in FIG. 5, the sl-DRX-HARQ-RTT-Timer is started at a moment T6. The moment T6 may be a first symbol generated after an end of a PSSCH scheduled by SCI, or a first symbol generated after an end of HARQ feedback for data scheduled by SCI, where the SCI herein indicates a new transmission or a retransmission. A running time of the sl-DRX-HARQ-RTT-Timer may be indicated by an SL DRX configuration. In the example in FIG. 5, the running time of the sl-DRX-HARQ-RTT-Timer includes duration between T6 and T7. It can be learned that the running time of the sl-DRX-HARQ-RTT-Timer is included in a running time of the sl-DRX-OnDurationTimer. The SL active time includes the running time of the sl-DRX-OnDurationTimer. FIG. 5 is used as an example. The SL active time includes duration between T1 and T2 and duration between T3 and T4.

### 3. SL DRX configuration

In an actual application, the SL DRX configuration may also be referred to as a DRX configuration for short.

An SLDRX configuration may include at least one of the following parameters: a value of an sl-DRX-OnDurationTimer, a value of an sl-DRX-InactivityTimer, a value of an sl-DRX-HARQ-RTT-Timer, a value of an sl-DRX-RetransmissionTimer, a value of a sidelink DRX start offset (sl-DRX-startOffset), a value of a sidelink DRX cycle (SL DRX cycle), or a value of a sidelink DRX slot offset (sl-DRX-slotOffset).

The value of the sl-DRX-OnDurationTimer indicates duration of the sl-DRX-OnDurationTimer, the value of the sl-DRX-InactivityTimer indicates duration of the sl-DRX-InactivityTimer, the value of the sl-DRX-HARQ-RTT-Timer indicates duration of the sl-DRX-HARQ-RTT-Timer, and the value of the sl-DRX-RetransmissionTimer indicates duration of the sl-DRX-RetransmissionTimer. The value of the sl-DRX-startOffset indicates a subframe in which the SL DRX cycle starts, in other words, a subframe in which the sl-DRX-OnDurationTimer is started. The value of the sl-DRX-SlotOffset indicates a slot delay generated before the sl-DRX-OnDurationTimer is started.

A terminal may monitor or send SL control information (for example, SCI) based on the SL DRX configuration.

### 4. SL quality of service (quality of service, QoS) profile (profile)

In an actual application, the SL QoS profile may also be referred to as a QoS profile for short.

An SL QoS profile includes one or more of the following: a PC5 interface 5G QoS identifier (PC5 5G QoS identifier, PQI), a guaranteed flow bit rate (guaranteed flow bit rate, GFBR), a maximum flow bit rate (maximum flow bit rate, MFBR), a PC5 link aggregate maximum bit rate (PC5 link aggregate maximum bit rate, PC5 Link-AMBR), or a range (range). A value of the range indicates a range to which a PC5 QoS parameter in PC5 communication is applicable. To be specific, when a range between a terminal on a receiver side and a terminal on a transmitter side exceeds the range (range) indicated by the SL QoS profile, the PC5 communication is best-effort.

The PQI indicates one or more of the following PC5 QoS parameters: a resource type (resource type), a priority level (priority level), a packet delay budget (packet delay budget, PDB), and a packet error rate (packet error rate, PER), an averaging window (averaging window), or a maximum data burst volume (maximum data burst volume, MDBV). The resource type may be a guaranteed bit rate (guaranteed bit rate, GBR), a delay critical GBR (Delay critical GBR), or a non-GBR (Non-GBR).

The PQI may be a standardized PQI or a non-standardized PQI. The standardized PQI is indicated by an integer.

In embodiments of this application, parameters indicated by the PQI, some parameters in the parameters indicated by the PQI, parameters indicated by the SL QoS profile, or some parameters in the parameters indicated by the SL QoS profile may be collectively referred to as a QoS parameter group. Therefore, it may also be understood that one QoS parameter group corresponds to one PQI or one SL QoS profile. In embodiments of this application, when a QoS parameter group includes the parameters indicated by the PQI, the QoS parameter group may also be referred to as a PQI. When a QoS parameter group includes the parameters indicated by the SL QoS profile, the QoS parameter group may also be referred to as an SL QoS profile.

### 5. SL radio bearer (radio bearer, RB) configuration

In an actual application, the SL RB configuration may also be referred to as an RB configuration for short.

For example, a terminal may obtain an SL RB configuration from signaling that is sent by a base station and that includes the SL RB configuration, or an SL RB configuration is preconfigured for a terminal.

Each SLRB configuration includes an index of the SLRB configuration and indication information indicating whether an SLRB is a default SLRB. Optionally, each SLRB configuration may further include a QoS flow or an SL QoS profile mapped to the SL RB.

Optionally, the SL RB configuration configured for the terminal may be indicated in a form of an SL RB list (for example, sl-RadioBearerToAddModList or sl-RadioBearerPreConfigList). One SL RB list includes one or more SL RB configurations (for example, SL-RadioBearerConfig).

### 6. Relationship between an SL RB configuration and an SL QoS profile

One SL RB configuration may correspond to one or more SL QoS profiles, and one SL QoS profile corresponds to one SL RB configuration. Different SL QoS profiles may correspond to a same SL RB configuration or different SL RB configurations.

### Example 1

For example, there are M SL RB configurations: an SL RB configuration 1 to an SL RB configuration M, where M is a positive integer.

The SL RB configuration 1 corresponds to an SL QoS profile 1, an SL QoS profile 2, and an SL QoS profile 3;
the SL RB configuration 2 corresponds to an SL QoS profile 4 and an SL QoS profile 5;
...; and
the SL RB configuration M corresponds to an SL QoS profile K-2, an SL QoS profile K-1, and an SL QoS profile K.

### 7. Relationship between an SL DRX configuration and a QoS parameter group

One SL DRX configuration may correspond to one or more groups of QoS parameters, one group of QoS parameters corresponds to one SL DRX configuration, and different QoS parameter groups may correspond to a same SL DRX configuration or different SL DRX configurations. One group of QoS parameters includes one or more of the following: an SL QoS profile, a PQI, a resource type, a priority level, a PDB, a PER, an averaging window, an MDBV, a GFBR, an MFBR, a PC5 Link-AMBR, or a range. In this embodiment of this application, an example in which a QoS parameter group is a PQI or an SL QoS profile is used for description.

### Example 2

When an SL DRX configuration is configured for a terminal at a granularity of an SL QoS profile, the configured SL DRX configuration is related to the SL QoS profile. For example, there are N SL DRX configurations: an SL DRX configuration 1 to an SL DRX configuration N, where N is a positive integer.

The SL DRX configuration 1 corresponds to an SL QoS profile 1 and an SL QoS profile 2;
the SL DRX configuration 2 corresponds to an SL QoS profile 3;
...; and
the SL DRX configuration N corresponds to an SL QoS profile L-1 and an SL QoS profile L.

### Example 3

When an SL DRX configuration is configured for a terminal at a granularity of a PQI, the SL DRX configuration is related to the PQI. For example, there are N SL DRX configurations: an SL DRX configuration 1 to an SL DRX configuration N, where N is a positive integer.

The SL DRX configuration 1 corresponds to a PQI 1 and a PQI 2;
the SL DRX configuration 2 corresponds to a PQI 3;
...; and
the SL DRX configuration N corresponds to a PQI L-1 and a PQI L.

### 8. Relationship between a destination layer-2 ID, a service of a terminal, and an SL DRX configuration

Different services performed between different terminals may use a same destination layer-2 ID used for sidelink multicast/broadcast communication. Different services may correspond to different QoS parameter groups, and a same service may correspond to a plurality of different QoS parameter groups. Therefore, one destination layer-2 ID may correspond to a plurality of groups of QoS parameters. In addition, different QoS parameter groups may correspond to different SL DRX configurations. Therefore, one destination layer-2 ID may correspond to a plurality of SL DRX configurations.

Currently, for an SL DRX configuration of sidelink multicast/broadcast communication, the following two problems need to be resolved.

First, in the sidelink multicast/broadcast communication, services performed by different terminals correspond to a same destination layer-2 ID, or different terminals in a group correspond to a same destination layer-2 ID, and one destination layer-2 ID may correspond to a plurality of SL DRX configurations. Therefore, different terminals may correspond to a plurality of SL DRX configurations for a same destination layer-2 ID. When different terminals performing a same service use different SL DRX configurations, SL active times of the different terminals may not be aligned, resulting in abnormal communication between the terminals. For example, if a terminal on a transmitter side sends sidelink data information or sidelink control information to a terminal on a receiver side at a time other than an SL active time maintained by the terminal on the receiver side, the terminal on the receiver side cannot receive the sidelink data information or the sidelink control information.

Second, when an SL DRX configuration is configured for a terminal at a granularity of a QoS parameter group (for example, an SL QoS profile or a PQI), a correspondence between the SL DRX configuration and the QoS parameter group needs to be configured for the terminal. Because there are a large quantity of QoS parameter groups, and each group of QoS parameters also includes large content, signaling overheads are large.

To resolve the first problem, embodiments of this application provide different solutions respectively corresponding to Embodiment 1 to Embodiment 4.

### Embodiment 1

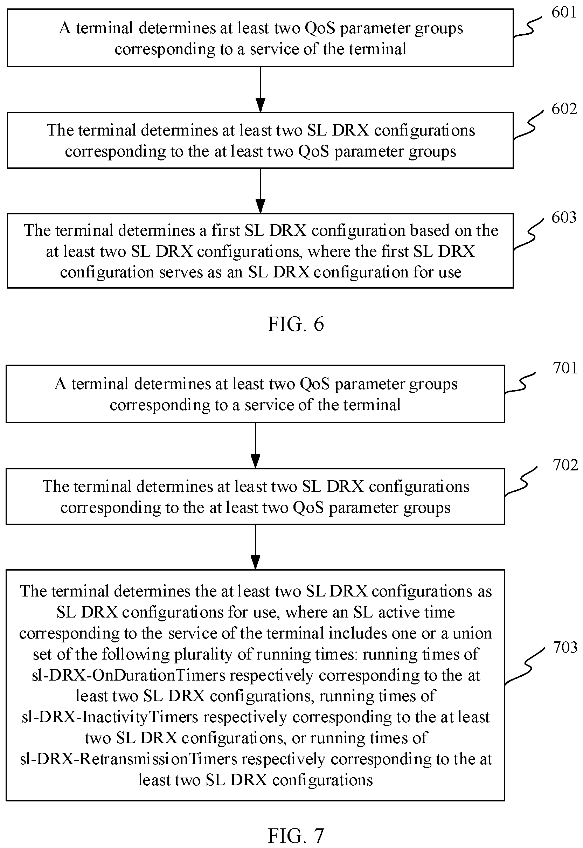

FIG. 6 is a schematic diagram of a method for determining an SL DRX configuration according to an embodiment of this application. The method includes the following steps.

Step 601: A terminal determines at least two QoS parameter groups corresponding to a service of the terminal.

Each service corresponds to one or more QoS parameter groups. A correspondence between a service of the terminal and a QoS parameter group may be configured by a core network element, may be preconfigured, or may be configured by a base station.

When there are a plurality of services of the terminal, the plurality of services correspond to a same destination layer-2 identifier (destination Layer-2 ID). The at least two QoS parameter groups corresponding to the service of the terminal may also be understood as the at least two QoS parameter groups corresponding to the destination layer-2 ID.

Step 602: The terminal determines at least two SL DRX configurations corresponding to the at least two QoS parameter groups, where each SL DRX configuration indicates one or more SL DRX parameters.

The terminal may determine, based on a correspondence between a QoS parameter group and an SL DRX configuration, the at least two SL DRX configurations corresponding to the at least two QoS parameter groups. The correspondence between the QoS parameter group and the SL DRX configuration may be configured by the base station, may be preconfigured, or may be configured by the core network element.

Different terminals may determine at least two SL DRX configurations corresponding to a same destination layer-2 ID. Therefore, the at least two SL DRX configurations determined by the different terminals are the same. It may also be understood that services corresponding to the destination layer-2 ID may be the same between a terminal on a transmitter side and a terminal on a receiver side. Therefore, at least two SL DRX configurations corresponding to the same services may be the same between the terminal on the transmitter side and the terminal on the receiver side.

Step 603: The terminal determines a first SL DRX configuration based on the at least two SL DRX configurations, where the first SL DRX configuration serves as an SL DRX configuration for use.

Further, the terminal may further determine, based on the first SL DRX configuration, a running time of a timer corresponding to the first SL DRX configuration. The timer herein includes one or more of an sl-DRX-onDurationTimer, an sl-DRX-inactivityTimer, an sl-DRX-HARQ-RTT-Timer, or an sl-DRX-RetransmissionTimer. Determining a running time of a timer includes determining timing duration, a start time, a restart time, a timeout time, or a stop time of the timer.

The terminal maintains a set of SL DRX timers, namely, the timer corresponding to the first SL DRX configuration, for the destination layer-2 ID corresponding to the service of the terminal. The terminal determines, based on the running time of the timer corresponding to the first SL DRX configuration, an SL active time corresponding to the destination layer-2 ID. For example, the SL active time corresponding to the destination layer-2 ID includes any one or a union set of the following plurality of running times: a running time of the sl-DRX-OnDurationTimer corresponding to the first SLDRX configuration, a running time of the sl-DRX-InactivityTimer corresponding to the first SL DRX configuration, or a running time of the sl-DRX-RetransmissionTimer corresponding to the first SL DRX configuration.

In an implementation, the terminal may determine, based on the first SL DRX configuration and SCI that corresponds to the destination layer-2 ID, the running time of the timer corresponding to the first SL DRX configuration. The SCI corresponding to the destination layer-2 ID means that a destination layer-1 ID included in the SCI is eight least significant bits (Least significant bits, 8 LSBs) of the destination layer-2 ID. For example, after sending the SCI corresponding to the destination layer-2 ID to the terminal on the receiver side, the terminal on the transmitter side starts one or more of the sl-DRX-inactivityTimer corresponding to the first SL DRX configuration, the sl-DRX-HARQ-RTT-Timer corresponding to the first SL DRX configuration, or the sl-DRX-RetransmissionTimer corresponding to the first SL DRX configuration. For another example, after receiving the SCI that is sent by the terminal on the transmitter side and that corresponds to the destination layer-2 ID, the terminal on the receiver side starts one or more of the sl-DRX-inactivityTimer corresponding to the first SL DRX configuration, the sl-DRX-HARQ-RTT-Timer corresponding to the first SL DRX configuration, or the sl-DRX-RetransmissionTimer corresponding to the first SL DRX configuration.

The foregoing terminal may be the terminal on the transmitter side or the terminal on the receiver side. To be specific, the terminal on the transmitter side and the terminal on the receiver side select, according to a same method, a same SL DRX configuration (namely, the first SL DRX configuration) from the at least two SL DRX configurations corresponding to the destination layer-2 ID. In this way, SL active times of the terminal on the transmitter side and the terminal on the receiver side can be aligned, and correct communication can be ensured.

A manner in which the terminal determines the first SL DRX configuration based on the at least two SL DRX configurations in step 603 includes, but is not limited to, the following method 1 and method 2.

Method 1: The terminal selects one SL DRX configuration as the first SL DRX configuration from the at least two SL DRX configurations.

In other words, the first SL DRX configuration is one of the at least two SL DRX configurations.

Specifically, the method 1 may include the following method 1.1 to method 1.6.

Method 1.1: Determine one of the at least two SL DRX configurations as the first SL DRX configuration based on first parameters in the at least two SL DRX configurations.

The first parameter is any one of the following parameters: a value of the sl-DRX-OnDurationTimer, a value of the sl-DRX-InactivityTimer, a value of the sl-DRX-HARQ-RTT-Timer, a value of the sl-DRX-RetransmissionTimer, a value of an sl-DRX-startOffset, a value of an SL DRX cycle, or a value of an sl-DRX-slotOffset.

For example, the determined first SL DRX configuration is an SL DRX configuration with a largest value of a first parameter in the at least two SL DRX configurations. For example, the first parameter is a value of the sl-DRX-OnDurationTimer. Values of the sl-DRX-OnDurationTimers in the at least two SL DRX configurations are compared, and then an SL DRX configuration with a largest value of the sl-DRX-OnDurationTimer is selected as the first SL DRX configuration.

For another example, the determined first SL DRX configuration is an SL DRX configuration with a smallest value of a first parameter in the at least two SL DRX configurations. For example, the first parameter is a value of an SL DRX cycle. Values of the SL DRX cycles in the at least two SL DRX configurations are compared, and then an SL DRX configuration with a smallest value of the SL DRX cycle is selected as the first SL DRX configuration.

It should be noted that, if values of first parameters in two or more SL DRX configurations are the same, and the values are the smallest or the largest, another SL DRX configuration may be further selected as the first SL DRX configuration from a plurality of selected SL DRX configurations. A selection method may include the following method A to method D.

Method A: Determine the first SL DRX configuration based on positions of the plurality of SL DRX configurations in an SL DRX configuration list.

For example, an SL DRX configuration positioned first or last in the SL DRX configuration list is selected as the first SL DRX configuration from the plurality of SL DRX configurations. In other words, in a case in which values of first parameters in a plurality of SL DRX configurations in the at least two SL DRX configurations are smallest values or largest values, the SL DRX configuration positioned first or last in the SL DRX configuration list is selected as the first SL DRX configuration from the plurality of SL DRX configurations.

For example, values of the sl-DRX-OnDurationTimers in the at least two SL DRX configurations are first compared, and then an SL DRX configuration with a largest value of an sl-DRX-OnDurationTimer is selected. For example, a result is that a value of an sl-DRX-OnDurationTimer in an SL DRX configuration 2 is the same as that in an SL DRX configuration 3, and the value is a largest value. In this case, positions of the SL DRX configuration 2 and the SL DRX configuration 3 in the SL DRX configuration list are further compared. For example, if the SL DRX configuration 2 is positioned first, the SL DRX configuration 2 is finally selected as the first SL DRX configuration.

Method B: Determine the first SL DRX configuration based on values of PQIs corresponding to the plurality of SL DRX configurations.

For example, the values of the PQIs corresponding to the plurality of SL DRX configurations are compared, and then an SL DRX configuration corresponding to a PQI with a smallest or largest value is selected as the first SL DRX configuration. In other words, in a case in which values of first parameters in a plurality of SL DRX configurations in the at least two SL DRX configurations are smallest values or largest values, the SL DRX configuration corresponding to the PQI with the smallest or largest value is selected as the first SL DRX configuration from the plurality of SL DRX configurations.

For example, values of the sl-DRX-OnDurationTimers in the at least two SL DRX configurations are first compared, and then an SL DRX configuration with a largest value of an sl-DRX-OnDurationTimer is selected. For example, a result is that a value of an sl-DRX-OnDurationTimer in an SL DRX configuration 2 is the same as that in an SL DRX configuration 3, and the value is a largest value. In this case, values of PQIs separately corresponding to the SL DRX configuration 2 and the SL DRX configuration 3 are further compared. For example, the SL DRX configuration 2 corresponds to a PQI 3, a PQI 4, and a PQI 5, the SL DRX configuration 3 corresponds to a PQI 6 and a PQI 7, a value of the PQI 4 is the smallest, and a value of the PQI 7 is the largest. If an SL DRX configuration corresponding to a PQI with a smallest value is selected as the first SL DRX configuration, the PQI 4 is selected as the first SL DRX configuration. If an SL DRX configuration corresponding to a PQI with a largest value is selected as the first SL DRX configuration, the PQI 7 is selected as the first SL DRX configuration.

Method C: Determine the first SL DRX configuration based on indexes of SL QoS profiles corresponding to the plurality of SL DRX configurations.

For example, the indexes of the SL QoS profiles corresponding to the plurality of SL DRX configurations are compared, and then an SL DRX configuration corresponding to an SL QoS profile with a smallest or largest index is selected as the first SL DRX configuration. In other words, in a case in which values of first parameters in a plurality of SL DRX configurations in the at least two SL DRX configurations are smallest values or largest values, the SL DRX configuration corresponding to the SL QoS profile with the smallest or largest index is selected as the first SL DRX configuration from the plurality of SL DRX configurations.

For example, values of the sl-DRX-OnDurationTimers in the at least two SL DRX configurations are first compared, and then an SL DRX configuration with a largest value of an sl-DRX-OnDurationTimer is selected. For example, a result is that a value of an sl-DRX-OnDurationTimer in an SL DRX configuration 2 is the same as that in an SL DRX configuration 3, and the value is a largest value. In this case, indexes of SL QoS profiles separately corresponding to the SLDRX configuration 2 and the SLDRX configuration 3 are further compared. For example, the SL DRX configuration 2 corresponds to an SL QoS profile 3, an SL QoS profile 4, and an SL QoS profile 5, the SL DRX configuration 3 corresponds to an SL QoS profile 6 and an SL QoS profile 7, and indexes of the SL QoS profile 3, the SL QoS profile 4, the SL QoS profile 5, the SL QoS profile 6, and the SL QoS profile 7 are 3, 4, 5, 6, and 7 respectively. If an SL DRX configuration corresponding to an SL QoS profile with a smallest index is selected as the first SL DRX configuration, the SL QoS profile 3 is selected as the first SL DRX configuration. If an SL DRX configuration corresponding to an SL QoS profile with a largest index is selected as the first SL DRX configuration, the SL QoS profile 7 is selected as the first SL DRX configuration.

Method D: Determine the first SL DRX configuration based on indexes of PQIs corresponding to the plurality of SL DRX configurations.

For example, the indexes of the PQIs corresponding to the plurality of SL DRX configurations are compared, and then an SL DRX configuration corresponding to a PQI with a smallest or largest index is selected as the first SL DRX configuration. In other words, in a case in which values of first parameters in a plurality of SL DRX configurations in the at least two SL DRX configurations are smallest values or largest values, the SL DRX configuration corresponding to the PQI with the smallest or largest index is selected as the first SL DRX configuration from the plurality of SL DRX configurations.

For example, values of the sl-DRX-OnDurationTimers in the at least two SL DRX configurations are first compared, and then an SL DRX configuration with a largest value of an sl-DRX-OnDurationTimer is selected. For example, a result is that a value of an sl-DRX-OnDurationTimer in an SL DRX configuration 2 is the same as that in an SL DRX configuration 3, and the value is a largest value. In this case, indexes of PQIs separately corresponding to the SL DRX configuration 2 and the SL DRX configuration 3 are further compared. For example, the SL DRX configuration 2 corresponds to a PQI 3, a PQI 4, and a PQI 5, the SL DRX configuration 3 corresponds to a PQI 6 and a PQI 7, and indexes of the PQI 3, the PQI 4, the PQI 5, the PQI 6, and the PQI 7 are 3, 4, 5, 6, and 7 respectively. If an SL DRX configuration corresponding to a PQI with a smallest index is selected as the first SL DRX configuration, the PQI 3 is selected as the first SL DRX configuration. If an SL DRX configuration corresponding to a PQI with a largest index is selected as the first SL DRX configuration, the PQI 7 is selected as the first SL DRX configuration.

Method 1.2: Determine one of the at least two SL DRX configurations as the first SL DRX configuration based on a plurality of parameters in the at least two SL DRX configurations.

To be specific, in a case in which values of first parameters in a plurality of SL DRX configurations in the at least two SL DRX configurations are smallest value or largest values, when a value of a second parameter in only one SL DRX configuration in the plurality of SL DRX configurations is the smallest or the largest, the SL DRX configuration is determined as the first SL DRX configuration; or when values of second parameters in a plurality of SL DRX configurations in the plurality of SL DRX configurations are the smallest or the largest, one of the plurality of SL DRX configurations is determined as the first SL DRX configuration.

Specifically, a plurality of SL DRX configurations are first determined based on the values of the first parameters in the at least two SL DRX configurations, where values of first parameters in the plurality of determined SL DRX configurations are the same. For example, a value of the first parameter is a largest or smallest value of the parameter in the plurality of SL DRX configurations. Then, one SL DRX configuration is determined based on values of second parameters in the plurality of determined SL DRX configurations, where a value of a second parameter in the determined SL DRX configuration is a largest value or a smallest value. If more than one SL DRX configuration is determined by using the first parameter and the second parameter, another parameter, for example, a third parameter, may continue to be used to further select an SLDRX configuration until one SLDRX configuration is selected.

A sequence of using the parameters in the SL DRX configuration for use is not limited. The first parameter, the second parameter, and the third parameter are different from each other. The first parameter, the second parameter, and the third parameter each are one of the following parameters: the value of the sl DRX cycle, the value of the sl-DRX-onDurationTimer, the value of the sl-DRX-inactivityTimer, the value of the sl-DRX-RetransmissionTimer, the value of the sl-DRX-HARQ-RTT-Timer, or the value of the sl-DRX-startOffset and the value of the sl-DRX-slotOffset.

Method 1.3: Determine the first SL DRX configuration based on positions of the at least two SL DRX configurations in an SL DRX configuration list.

For example, an SL DRX configuration positioned first or last in the SL DRX configuration list is selected as the first SL DRX configuration.

For example, SL DRX configurations in the SL DRX configuration list are an SLDRX configuration 1, an SL DRX configuration 2, an SL DRX configuration 3, and ... in sequence. In this case, the SL DRX configuration 1 is finally selected as the first SL DRX configuration.

Method 1.4: Determine the first SL DRX configuration based on values of PQIs corresponding to the at least two SL DRX configurations.

For example, the values of the PQIs corresponding to the at least two SL DRX configurations are compared, and then an SL DRX configuration corresponding to a PQI with a smallest or largest value is selected as the first SL DRX configuration.

For example, an SL DRX configuration 1 corresponds to a PQI 1 and a PQI 2, an SL DRX configuration 2 corresponds to a PQI 3, a PQI 4, and a PQI 5, an SL DRX configuration 3 corresponds to a PQI 6 and a PQI 7, a value of the PQI 4 is the smallest, and a value of the PQI 7 is the largest. If an SL DRX configuration corresponding to a PQI with a smallest value is selected as the first SL DRX configuration, the PQI 4 is selected as the first SL DRX configuration. If an SL DRX configuration corresponding to a PQI with a largest value is selected as the first SL DRX configuration, the PQI 7 is selected as the first SL DRX configuration.

Method 1.5: Determine the first SL DRX configuration based on indexes of SL QoS profiles corresponding to the at least two SL DRX configurations.

For example, the indexes of the SL QoS profiles corresponding to the at least two SL DRX configurations are compared, and then an SL DRX configuration corresponding to an SL QoS profile with a smallest or largest index is selected as the first SL DRX configuration.

For example, an SL DRX configuration 1 corresponds to an SL QoS profile 1 and an SL QoS profile 2, an SL DRX configuration 2 corresponds to an SL QoS profile 3, an SL QoS profile 4, and an SL QoS profile 5, an SL DRX configuration 3 corresponds to an SL QoS profile 6 and an SL QoS profile 7, and indexes of the SL QoS profile 1, the SL QoS profile 2, the SL QoS profile 3, the SL QoS profile 4, the SL QoS profile 5, the SL QoS profile 6, and the SL QoS profile 7 are 1, 2, 3, 4, 5, 6, and 7 respectively. If an SL DRX configuration corresponding to an SL QoS profile with a smallest index is selected as the first SL DRX configuration, the SL QoS profile 1 is selected as the first SL DRX configuration. If an SL DRX configuration corresponding to an SL QoS profile with a largest index is selected as the first SL DRX configuration, the SL QoS profile 7 is selected as the first SL DRX configuration.

Method 1.6: Determine the first SL DRX configuration based on indexes of PQIs corresponding to the at least two SL DRX configurations.

For example, the indexes of the PQIs corresponding to the at least two SL DRX configurations are compared, and then an SL DRX configuration corresponding to a PQI with a smallest or largest index is selected as the first SL DRX configuration.

For example, an SL DRX configuration 1 corresponds to a PQI 1 and a PQI 2, an SL DRX configuration 2 corresponds to a PQI 3, a PQI 4, and a PQI 5, an SL DRX configuration 3 corresponds to a PQI 6 and a PQI 7, and indexes of the PQI 1, the PQI 2, the PQI 3, the PQI 4, the PQI 5, the PQI 6, and the PQI 7 are 1, 2, 3, 4, 5, 6, and 7 respectively. If an SL DRX configuration corresponding to a PQI with a smallest index is selected as the first SL DRX configuration, the PQI 1 is selected as the first SL DRX configuration. If an SL DRX configuration corresponding to a PQI with a largest index is selected as the first SL DRX configuration, the PQI 7 is selected as the first SL DRX configuration.

Method 2: Generate the first SL DRX configuration based on the at least two SL DRX configurations.

In other words, the first SL DRX configuration is generated based on the at least two SL DRX configurations. A value of a parameter in the first SLDRX configuration comes from one or more of the at least two SL DRX configurations.

For example, the first SL DRX configuration is generated based on a largest or smallest value of each parameter in the at least two SL DRX configurations. In other words, a value of a first parameter included in the first SL DRX configuration is a smallest value or a largest value in values of first parameters respectively included in the at least two SL DRX configurations. For example, a value of an SL DRX cycle, a value of an sl-DRX-HARQ-RTT-Timer, a value of an sl-DRX-startOffset, and a value of an sl-DRX-slotOffset in the generated first SL DRX configuration each are a smallest value in the at least two DRX configurations, and a value of an sl-DRX-onDurationTimer, a value of an sl-DRX-inactivityTimer, and a value of an sl-DRX-RetransmissionTimer in the generated first SL DRX configuration each are a largest value in the at least two DRX configurations.

According to the solution, in a case in which the service of the terminal corresponds to the at least two SL DRX configurations, the terminal on the transmitter side and the terminal on the receiver side determine one SL DRX configuration from the at least two SL DRX configurations according to a same method. Therefore, the terminal on the transmitter side and the terminal on the receiver side use the same SL DRX configuration, so that the SL active times of the terminal on the transmitter side and the terminal on the receiver side can be aligned.

In an implementation, step 602 and step 603 may alternatively be replaced with steps that a first QoS parameter group is determined based on the at least two QoS parameter groups, and a SL DRX configuration corresponding to the first QoS parameter group is determined as a first SL DRX configuration. For example, a QoS parameter group is a PQI. In this case, the first QoS parameter group (namely, a first PQI) may be a PQI with a smallest or largest value in a plurality of PQIs, or a PQI with a smallest or largest index in a plurality of PQIs. For example, a QoS parameter group is an SL QoS profile. In this case, the first QoS parameter group (namely, a first SL QoS profile) may be an SL QoS profile with a smallest or largest index in a plurality of SL QoS profiles.

### Embodiment 2

FIG. 7 is a schematic diagram of a method for determining an SL DRX configuration according to an embodiment of this application. The method includes the following steps.

Step 701 and step 702 are the same as step 601 and step 602. For details, refer to the foregoing descriptions.

Step 703: The terminal determines at least two SL DRX configurations as SL DRX configurations for use, where an SL active time corresponding to the service of the terminal includes one or a union set of the following plurality of running times: running times of sl-DRX-OnDurationTimers respectively corresponding to the at least two SL DRX configurations, running times of sl-DRX-InactivityTimers respectively corresponding to the at least two SL DRX configurations, or running times of sl-DRX-RetransmissionTimers respectively corresponding to the at least two SL DRX configurations.

The terminal may determine, based on the at least two SL DRX configurations, running times of timers corresponding to the at least two SL DRX configurations. The timer herein includes one or more of an sl-DRX-onDurationTimer, an sl-DRX-inactivityTimer, an sl-DRX-HARQ-RTT-Timer, or an sl-DRX-RetransmissionTimer. Determining a running time of a timer includes determining timing duration, a start time, a restart time, a timeout time, or a stop time of the timer.

The terminal maintains the plurality of sets of SL DRX timers for a destination layer-2 ID corresponding to the service of the terminal. An SL active time corresponding to the destination layer-2 ID may be determined based on running times of each set of SL DRX timers. The SL active time corresponding to the destination layer-2 ID may also be referred to as the SL active time corresponding to the service of the terminal.

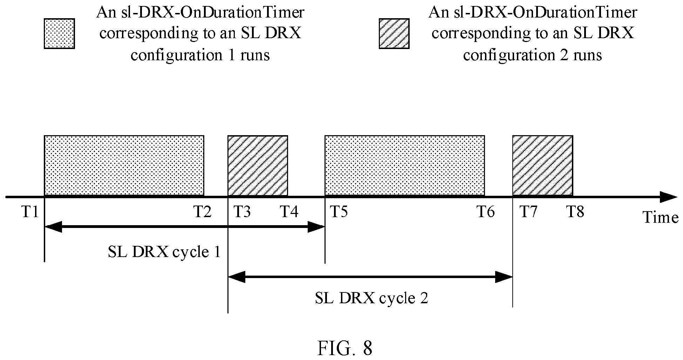

FIG. 8 is a schematic diagram of running times of sl-DRX-OnDurationTimers corresponding to different SL DRX configurations. For example, FIG. 8 shows a running time of an sl-DRX-OnDurationTimer corresponding to an SL DRX configuration 1 and a running time of an sl-DRX-OnDurationTimer corresponding to an SL DRX configuration 2. The SL DRX configuration 1 includes an SL DRX cycle 1, and the SL DRX configuration 2 includes an SL DRX cycle 2. Based on the example in FIG. 8, the running time of the sl-DRX-OnDurationTimer corresponding to the SL DRX configuration 1 includes duration between T1 and T2 and duration between T5 and T6. The running time of the sl-DRX-OnDurationTimer corresponding to the SL DRX configuration 2 includes duration between T3 and T4 and duration between T7 and T8. The SL active time corresponding to the destination layer-2 ID includes the duration between T1 and T2, the duration between T3 and T4, the duration between T5 and T6, and the duration between T7 and T8.

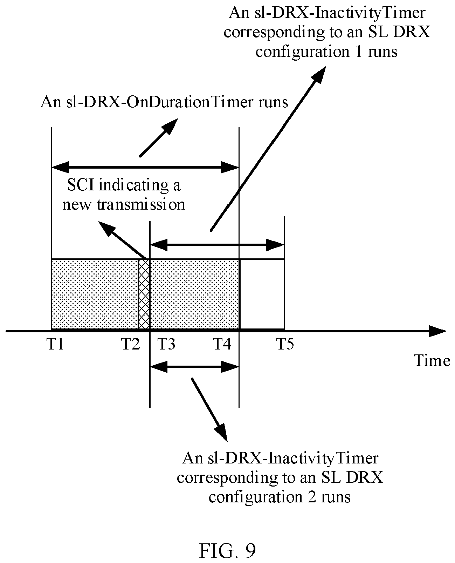

FIG. 9 is a schematic diagram of running times of sl-DRX-InactivityTimers corresponding to different SL DRX configurations and a running time of an sl-DRX-OnDurationTimer. For example, FIG. 9 shows running times of an sl-DRX-InactivityTimer and the sl-DRX-OnDurationTimer that correspond to an SL DRX configuration 1 and a running time of an sl-DRX-InactivityTimer corresponding to an SL DRX configuration 2. Based on the example in FIG. 9, a running time of the sl-DRX-OnDurationTimer corresponding to the SL DRX configuration 1 includes duration between T1 and T4. A running time of the sl-DRX-InactivityTimer corresponding to the SL DRX configuration 1 includes duration between T3 and T5. The running time of the sl-DRX-InactivityTimer corresponding to the SL DRX configuration 2 includes duration between T3 and T4. The SL active time corresponding to the destination layer-2 ID includes the duration between T3 and T5, the duration between T3 and T4, and the duration between T1 and T4. In other words, the SL active time corresponding to the destination layer-2 ID includes duration between T1 and T5.

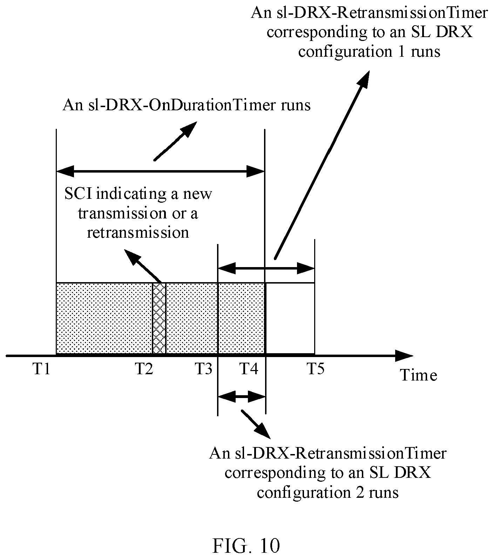

FIG. 10 is a schematic diagram of running times of sl-DRX-RetransmissionTimers corresponding to different SL DRX configurations and a running time of an sl-DRX-OnDurationTimer. For example, FIG. 10 shows running times of an sl-DRX-RetransmissionTimer and the sl-DRX-OnDurationTimer that correspond to an SL DRX configuration 1, and a running time of an sl-DRX-RetransmissionTimer corresponding to an SL DRX configuration 2. Based on the example in FIG. 10, a running time of the sl-DRX-RetransmissionTimer corresponding to the SL DRX configuration 1 includes duration between T3 and T5. The running time of the sl-DRX-RetransmissionTimer corresponding to the SL DRX configuration 2 includes duration between T3 and T4. A running time of the sl-DRX-OnDurationTimer corresponding to the SL DRX configuration 1 includes duration between T1 and T4. The SL active time corresponding to the destination layer-2 ID includes the duration between T3 and T5, the duration between T3 and T4, and the duration between T1 and T4. In other words, the SL active time corresponding to the destination layer-2 ID includes duration between T1 and T5.

The foregoing terminal may be a terminal on a transmitter side or a terminal on a receiver side. To be specific, the terminal on the transmitter side and the terminal on the receiver side determine, based on the at least two SL DRX configurations corresponding to the service of the terminal, the running times of the timers corresponding to the at least two SL DRX configurations according to a same method. In this way, the terminal on the transmitter side and the terminal on the receiver side can align SL active times of the terminal on the transmitter side and the terminal on the receiver side, and correct communication can be ensured.

It should be noted that, for an sl-DRX-onDurationTimer corresponding to each SL DRX configuration, the terminal may determine, based on a value of a parameter indicated by each SL DRX configuration, a running time of the sl-DRX-onDurationTimer corresponding to the SL DRX configuration. The sl-DRX-onDurationTimer corresponding to each SL DRX configuration runs periodically.

In an implementation, the terminal may determine, based on the at least two SL DRX configurations and SCI that corresponds to the destination layer-2 ID, the running times of the timers corresponding to the at least two SL DRX configurations. For a meaning of the SCI corresponding to the destination layer-2 ID, refer to the foregoing descriptions. For example, after sending the SCI corresponding to the destination layer-2 ID to the terminal on the receiver side, the terminal on the transmitter side starts one or more of the sl-DRX-inactivityTimer corresponding to each SL DRX configuration, the sl-DRX-HARQ-RTT-Timer corresponding to each SL DRX configuration, or the sl-DRX-RetransmissionTimer corresponding to each SL DRX configuration. For another example, after receiving the SCI that is sent by the terminal on the transmitter side and that corresponds to the destination layer-2 ID, the terminal on the receiver side starts one or more of the sl-DRX-inactivityTimer corresponding to each SL DRX configuration, the sl-DRX-HARQ-RTT-Timer corresponding to each SL DRX configuration, or the sl-DRX-RetransmissionTimer corresponding to each SL DRX configuration.

Therefore, when the destination layer-2 IDs are the same, but transmitted data corresponds to different SL QoS profiles/PQIs, methods for starting timers corresponding to SL DRX configurations are the same. A plurality of pieces of data that are sent by the terminal on the transmitter side and that correspond to the destination layer-2 ID may correspond to different SL QoS profiles/PQIs within the SL active time corresponding to the destination layer-2 ID.

According to the foregoing solution, in a case in which the service of the terminal corresponds to the at least two SL DRX configurations, the terminal on the transmitter side and the terminal on the receiver side separately maintain a set of SL DRX timers for each SL DRX configuration corresponding to the service of the terminal, and the terminal on the transmitter side and the terminal on the receiver side use at least two same SL DRX configurations, maintain a same timer, and use a same SL DRX timer activity method. In this way, SL active times of the terminal on the transmitter side and the terminal on the receiver side can be aligned.

### Embodiment 3

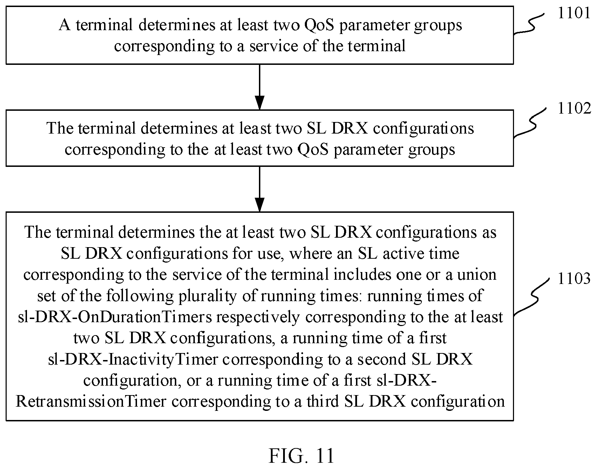

FIG. 11 is a schematic diagram of a method for determining an SL DRX configuration according to an embodiment of this application. The method includes the following steps.

Step 1101 and step 1102 are the same as step 601 and step 602. For details, refer to the foregoing descriptions.

For a specific implementation of this step, refer to the implementation of step 601. Details are not described again.

Step 1103: The terminal determines at least two SL DRX configurations as SL DRX configurations for use, where an SL active time corresponding to the service of the terminal includes one or a union set of the following plurality of running times: running times of sl-DRX-OnDurationTimers respectively corresponding to the at least two SL DRX configurations, a running time of a first sl-DRX-InactivityTimer corresponding to a second SL DRX configuration, or a running time of a first sl-DRX-RetransmissionTimer corresponding to a third SL DRX configuration.

The second SL DRX configuration and the third SL DRX configuration are separately one of the at least two SL DRX configurations. The second SL DRX configuration and the third SL DRX configuration may be the same or different.

Specifically, the terminal determines, based on the at least two SL DRX configurations, the running times of the sl-DRX-onDurationTimers respectively corresponding to the at least two SL DRX configurations, and determines a running time of one or more of the first sl-DRX-inactivityTimer corresponding to the second SL DRX configuration or the first sl-DRX-RetransmissionTimer corresponding to the third SL DRX configuration. Optionally, the terminal further determines a running time of a first sl-DRX-HARQ-RTT-Timer corresponding to a fourth SL DRX configuration. The fourth SL DRX configuration is one of the at least two SL DRX configurations. The fourth SL DRX configuration may be the same as the second SL DRX configuration or the third SL DRX configuration, or may be different from both the second SL DRX configuration and the third SL DRX configuration.

The first sl-DRX-inactivityTimer is one of sl-DRX-inactivityTimers respectively corresponding to the at least two SL DRX configurations, for example, an sl-DRX-inactivityTimer with a smallest value or an sl-DRX-inactivityTimer with a largest value. The first sl-DRX-HARQ-RTT-Timer is one of sl-DRX-HARQ-RTT-Timers respectively corresponding to the at least two SL DRX configurations, for example, an sl-DRX-HARQ-RTT-Timer with a smallest value or an sl-DRX-HARQ-RTT-Timer with a largest value. The first sl-DRX-RetransmissionTimer is one of sl-DRX-RetransmissionTimers respectively corresponding to the at least two SL DRX configurations, for example, an sl-DRX-RetransmissionTimer with a smallest value or an sl-DRX-RetransmissionTimer with a largest value.

That is, for a destination layer-2 ID corresponding to the service of the terminal, the terminal maintains a plurality of sl-DRX-onDurationTimers, and maintains one sl-DRX-inactivityTimer, one sl-DRX-HARQ-RTT-Timer, and one sl-DRX-RetransmissionTimer. The terminal determines, based on the running times of the sl-DRX-onDurationTimers respectively corresponding to the at least two SL DRX configurations and the running time of one or more of the first sl-DRX-inactivityTimer or the first sl-DRX-RetransmissionTimer, an SL active time corresponding to the destination layer-2 ID. The SL active time corresponding to the destination layer-2 ID is also referred to as the SL active time corresponding to the service of the terminal.

For an example of running times of sl-DRX-OnDurationTimers corresponding to different SL DRX configurations, refer to the schematic diagram shown in FIG. 8 and related descriptions.

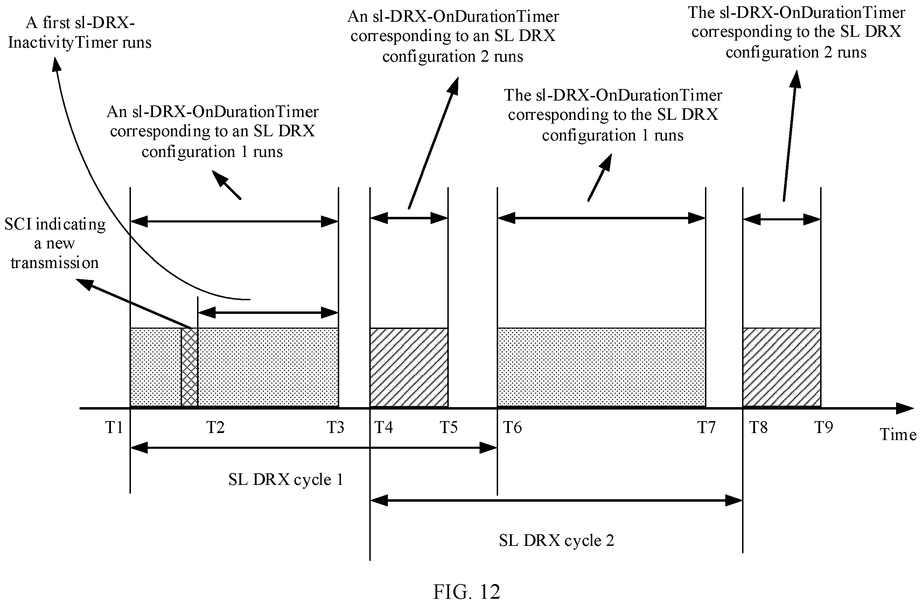

FIG. 12 is a schematic diagram of running times of sl-DRX-OnDurationTimers corresponding to different SL DRX configurations and a running time of a first sl-DRX-InactivityTimer. For example, FIG. 12 shows a running time of an sl-DRX-OnDurationTimer corresponding to an SL DRX configuration 1, a running time of an sl-DRX-OnDurationTimer corresponding to an SL DRX configuration 2, and the running time of the first sl-DRX-InactivityTimer. In this example, the first sl-DRX-InactivityTimer corresponds to the SL DRX configuration 1, the SL DRX configuration 2, or another SL DRX configuration. The following provides descriptions by using an example in which the first sl-DRX-InactivityTimer corresponds to the SL DRX configuration 1. Based on the example in FIG. 12, the running time of the sl-DRX-OnDurationTimer corresponding to the SLDRX configuration 1 includes duration between T1 and T3 and duration between T6 and T7. The running time of the sl-DRX-OnDurationTimer corresponding to the SL DRX configuration 2 includes duration between T4 and T5 and duration between T8 and T9. The running time of the first sl-DRX-InactivityTimer includes duration between T2 and T3. Therefore, the SL active time corresponding to the destination layer-2 ID includes the duration between T1 and T3, the duration between T4 and T5, the duration between T6 and T7, and the duration between T8 and T9.

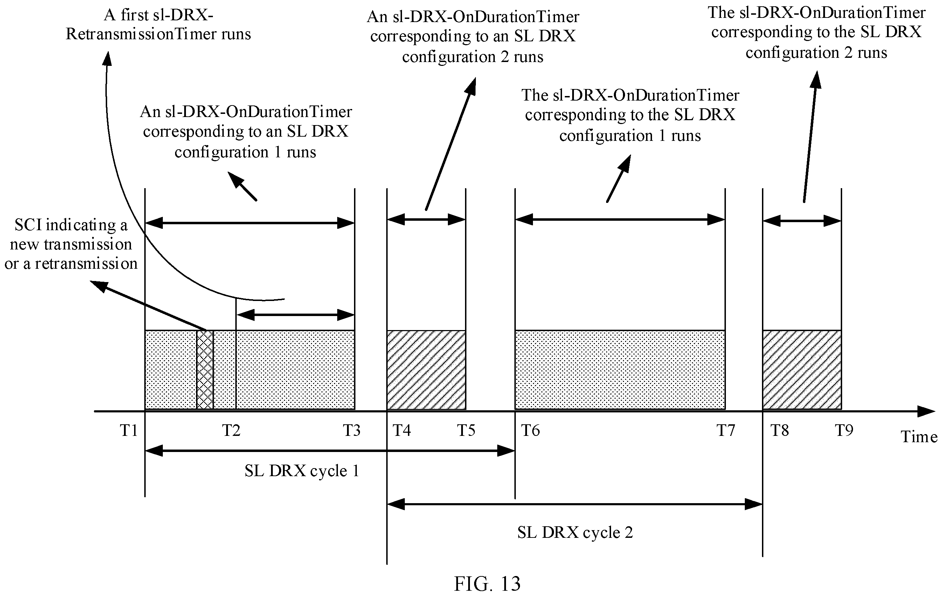

FIG. 13 is a schematic diagram of running times of sl-DRX-OnDurationTimers corresponding to different SL DRX configurations and a running time of a first sl-DRX-RetransmissionTimer. For example, FIG. 13 shows a running time of an sl-DRX-OnDurationTimer corresponding to an SL DRX configuration 1, a running time of an sl-DRX-OnDurationTimer corresponding to an SL DRX configuration 2, and the running time of the first sl-DRX-RetransmissionTimer. In this example, the first sl-DRX-RetransmissionTimer corresponds to the SL DRX configuration 1, the SL DRX configuration 2, or another SL DRX configuration. The following provides descriptions by using an example in which the first sl-DRX-RetransmissionTimer corresponds to the SL DRX configuration 1. Based on the example in FIG. 13, the running time of the sl-DRX-OnDurationTimer corresponding to the SL DRX configuration 1 includes duration between T1 and T3 and duration between T6 and T7. The running time of the sl-DRX-OnDurationTimer corresponding to the SL DRX configuration 2 includes duration between T4 and T5 and duration between T8 and T9. The running time of the first sl-DRX-RetransmissionTimer includes duration between T2 and T3. Therefore, the SL active time corresponding to the destination layer-2 ID includes the duration between T1 and T3, the duration between T4 and T5, the duration between T6 and T7, and the duration between T8 and T9.

In an implementation, step 1102 may be specifically that the terminal determines a running time of one or more of the first sl-DRX-inactivityTimer, the first sl-DRX-HARQ-RTT-Timer, or the first sl-DRX-RetransmissionTimer based on the at least two SL DRX configurations and the SCI that corresponds to the destination layer-2 ID. For a meaning of the SCI corresponding to the destination layer-2 ID, refer to the foregoing descriptions. For example, after sending the SCI corresponding to the destination layer-2 ID to a terminal on a receiver side, a terminal on a transmitter side starts one or more of the first sl-DRX-inactivityTimer, the first sl-DRX-HARQ-RTT-Timer, or the first sl-DRX-RetransmissionTimer. For another example, after receiving the SCI that is sent by a terminal on a transmitter side and that corresponds to the destination layer-2 ID, a terminal on a receiver side starts one or more of the first sl-DRX-inactivityTimer, the first sl-DRX-HARQ-RTT-Timer, or the first sl-DRX-RetransmissionTimer.

The foregoing terminal may be the terminal on the transmitter side or the terminal on the receiver side. To be specific, the terminal on the transmitter side and the terminal on the receiver side determine, based on the at least two SL DRX configurations corresponding to the service of the terminal, the running times of the sl-DRX-onDurationTimers corresponding to the at least two SL DRX configurations and running times of one sl-DRX-inactivityTimer, one sl-DRX-HARQ-RTT-Timer, and one sl-DRX-RetransmissionTimer according to a same method. In this way, SL active times of the terminal on the transmitter side and the terminal on the receiver side can be aligned, and correct communication can be ensured.

According to the foregoing solution, in a case in which the service of the terminal corresponds to the at least two SL DRX configurations, the terminal on the transmitter side and the terminal on the receiver side maintain the sl-DRX-onDurationTimer corresponding to each DL DRX configuration, and maintain the one sl-DRX-InactivityTimer, the one sl-DRX-HARQ-RTT-Timer, or the one sl-DRX-RetransmissionTimer, and the terminal on the transmitter side and the terminal on the receiver side use at least two same SL DRX configurations, maintain a same timer, and use a same SL DRX timer activity method. In this way, SL active times of the terminal on the transmitter side and the terminal on the receiver side can be aligned. In addition, because only one sl-DRX-InactivityTimer, sl-DRX-HARQ-RTT-Timer, or sl-DRX-RetransmissionTimer is maintained, complexity can be reduced.

### Embodiment 4

Embodiment 4 is the same as Embodiment 2 in that both a terminal on a transmitter side and a terminal on a receiver side use at least two SL DRX configurations corresponding to a service of a terminal, each SL DRX configuration corresponds to a set of SL DRX timers, and each set of SL DRX timers is maintained for the service of the terminal. The service of the terminal corresponds to a same destination layer-2 ID. Therefore, in other words, each set of SL DRX timers may be maintained for one destination layer-2 ID.

A difference between Embodiment 4 and Embodiment 2 lies in that in Embodiment 4, an SL active time may be determined based on running times of each set of SL DRX timers. The SL active time includes any one or a union set of the following plurality of running times: a running time of an sl-DRX-OnDurationTimer in a set of SL DRX timers, a running time of an sl-DRX-InactivityTimer in the set of SL DRX timers, or a running time of an sl-DRX-RetransmissionTimer in the set of SL DRX timers. Each SL active time is an SL active time corresponding to one or more SL QoS profiles/PQIs. In other words, there is a correspondence between the SL active time and the SL QoS profiles/PQIs. The one or more SL QoS profiles/PQIs correspond to an SL DRX configuration corresponding to the SL active time. The terminal on the transmitter side separately sends, at the SL active time corresponding to the one or more SL QoS profiles/PQIs, SCI corresponding to both the destination layer-2 ID and the SL QoS profiles/PQIs. The terminal on the receiver side receives, at the SL active time corresponding to the one or more SL QoS profiles/PQIs, SCI corresponding to the destination layer-2 ID, or the terminal on the receiver side receives, at the SL active time corresponding to the one or more SL QoS profiles/PQIs, SCI corresponding to both the destination layer-2 ID and the SL QoS profiles/PQIs. The SCI corresponding to both the destination layer-2 ID and the SL QoS profiles/PQIs means that a destination layer-1 ID included in the SCI is least significant eight bits (Least significant bits, 8 LSB) of the destination layer-2 ID, and SL QoS profile/PQIs of data scheduled by the SCI are the SL QoS profile/PQIs. In Embodiment 4, the SL active time of the terminal includes the SL active time corresponding to the one or more SL QoS profiles/PQIs.

In an implementation, at least two SL DRX configurations that correspond to the destination layer-2 ID and that are determined by different terminals are the same. For example, if services corresponding to the destination layer-2 ID are the same between different terminals, QoS parameter groups in the services corresponding to the destination layer-2 ID correspond to at least two same SL DRX configurations. Therefore, the services corresponding to the destination layer-2 IDs may be the same between the terminal on the transmitter side and the terminal on the receiver side. The at least two SL DRX configurations corresponding to the destination layer-2 ID may be the same between the terminal on the transmitter side and the terminal on the receiver side.

In another implementation, at least two SL DRX configurations that correspond to the destination layer-2 ID and that are determined by different terminals are different. For example, if services corresponding to the destination layer-2 IDs are different between different terminals, a QoS parameter group in the service corresponding to the destination layer-2 ID corresponds to at least two different SL DRX configurations. If the service corresponding to the destination layer-2 ID is a service that corresponds to the destination layer-2 ID and that the terminal is interested in, because different terminals are interested in different services, the services corresponding to the destination layer-2 ID may be different between different terminals. Therefore, the services corresponding to the destination layer-2 ID may be different between the terminal on the transmitter side and the terminal on the receiver side. The at least two SL DRX configurations corresponding to the destination layer-2 ID may be different between the terminal on the transmitter side and the terminal on the receiver side.

In an implementation, the terminal on the transmit side sends, within an SL active time, SCI corresponding to the destination layer-2 ID, where the SCI includes indication information that corresponds to data scheduled by the SCI and that indicates one or more SL QoS profiles/PQIs. The terminal on the transmitter side determines a DRX configuration corresponding to the SL QoS profile/PQIs, and determines a running time of one or more of an sl-DRX-inactivityTimer, an sl-DRX-HARQ-RTT-Timer, or an sl-DRX-RetransmissionTimer corresponding to the DRX configuration. After receiving the SCI, the terminal on the receiver side obtains the SL QoS profile/PQIs in the SCI, determines the DRX configuration corresponding to the SL QoS profile/PQIs, and determines the running time of one or more of the sl-DRX-inactivityTimer, the sl-DRX-HARQ-RTT-Timer, or the sl-DRX-RetransmissionTimer corresponding to the DRX configuration.

For an example of running times of sl-DRX-OnDurationTimers corresponding to different SL DRX configurations, refer to the schematic diagram shown in FIG. 8 and related descriptions.

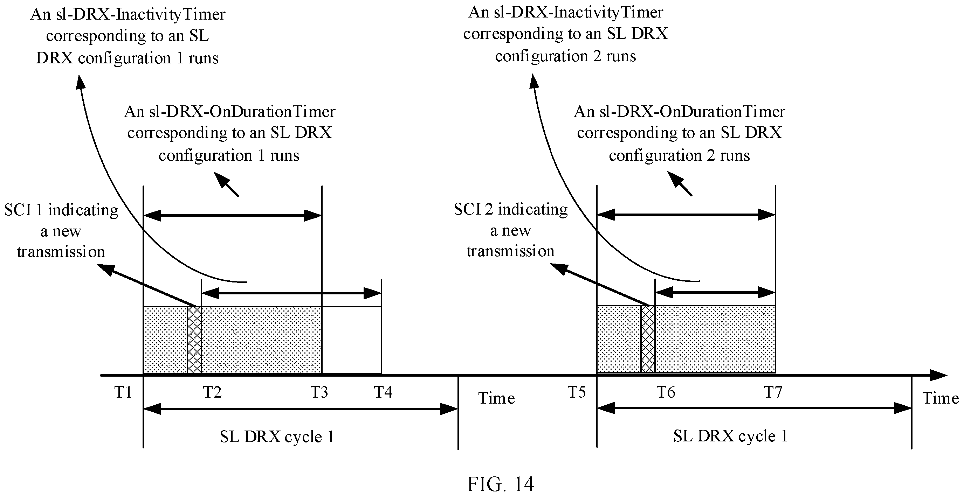

FIG. 14 is a schematic diagram of running times of an sl-DRX-OnDurationTimer and an sl-DRX-InactivityTimer that correspond to different SL DRX configurations. For example, FIG. 14 shows a running time of an sl-DRX-OnDurationTimer corresponding to an SL DRX configuration 1, a running time of an sl-DRX-InactivityTimer corresponding to the SL DRX configuration 1, a running time of an sl-DRX-OnDurationTimer corresponding to an SL DRX configuration 2, and a running time of an sl-DRX-InactivityTimer corresponding to the SL DRX configuration 2. The SL DRX configuration 1 corresponds to an SL QoS profile 1, and the SL DRX configuration 2 corresponds to an SL QoS profile 2. Based on the example in FIG. 14, when the terminal at the transmitter side sends, at an SL active time corresponding to the SL QoS profile 1, SCI 1 corresponding to the destination layer-2 ID, the SCI 1 includes indication information of the SL QoS profile 1. The terminal at the receiver side obtains the indication information that is in the SCI 1 and that indicates the SL QoS profile 1, determines, based on the indication information, that data scheduled by the SCI 1 corresponds to the SL QoS profile 1, and determines the SLDRX configuration 1 corresponding to the SL QoS profile 1. Further, the sl-DRX-InactivityTimer is started, and a running time of the started sl-DRX-InactivityTimer is determined based on the sl-DRX-InactivityTimer in the SL DRX configuration 1. In this case, the SL active time corresponding to the SL QoS profile 1 includes duration between T1 and T3 and duration between T2 and T4. In other words, the SL active time corresponding to the SL QoS profile 1 includes duration between T1 and T4. Based on the example in FIG. 14, when the terminal at the transmitter side sends, at an SL active time corresponding to the SL QoS profile 2, SCI 2 corresponding to the destination layer-2 ID, the SCI 2 includes indication information of the SL QoS profile 2. The terminal at the receiver side obtains the indication information of the SL QoS profile 2 in the SCI 2, determines, based on the indication information, that data scheduled by the SCI 2 corresponds to the SL QoS profile 2, and determines the SL DRX configuration 2 corresponding to the SL QoS profile 2. Further, the sl-DRX-InactivityTimer is started, and a running time of the started sl-DRX-InactivityTimer is determined based on the sl-DRX-InactivityTimer in the SL DRX configuration 2. In this case, the SL active time corresponding to the SL QoS profile 2 includes duration between T5 and T7 and duration between T6 and T7. In other words, the SL active time corresponding to the SL QoS profile 2 includes the duration between T5 and T7. An SL active time corresponding to the destination layer-2 ID includes the duration between T1 and T3 and the duration between T5 and T7.

To meet a requirement that "the terminal on the transmitter side sends, within an SL active time, SCI corresponding to the destination layer-2 ID, where the SCI includes one or more SL QoS profiles/PQIs corresponding to data scheduled by the SCI", each layer from a service data adaptation protocol (service data adaptation protocol, SDAP) layer to a media access control (medium access control, MAC) layer of the terminal on the transmitter side needs to indicate or mark an SL QoS profile/PQI corresponding to each data packet. Data corresponding to a same SL QoS profile/PQI may be multiplexed into a same MAC protocol data unit (protocol data unit, PDU), and data corresponding to different SL QoS profiles/PQIs is multiplexed into different MAC PDUs. It should be noted that, for SCI that has a same destination layer-2 ID but carries different SL QoS profiles/PQIs, a status of an SL DRX timer corresponding to the SL QoS profile/PQIs changes, but a status of an SL DRX timer corresponding to another SL QoS profile/PQI does not change.

In another implementation, the terminal on the transmitter side sends SCI corresponding to the destination layer-2 ID, where the SCI does not include an SL QoS profile/PQI corresponding to data scheduled by the SCI. The terminal on the receiver side determines, based on the received SCI corresponding to the destination layer-2 ID, a running time of one or more of the sl-DRX-inactivityTimer, the sl-DRX-HARQ-RTT-Timer, or the sl-DRX-RetransmissionTimer corresponding to each SL DRX configuration. To be specific, the terminal on the receiver side determines that SL active time corresponding to the destination layer-2 ID includes SL active times corresponding to all SL DRX configurations.

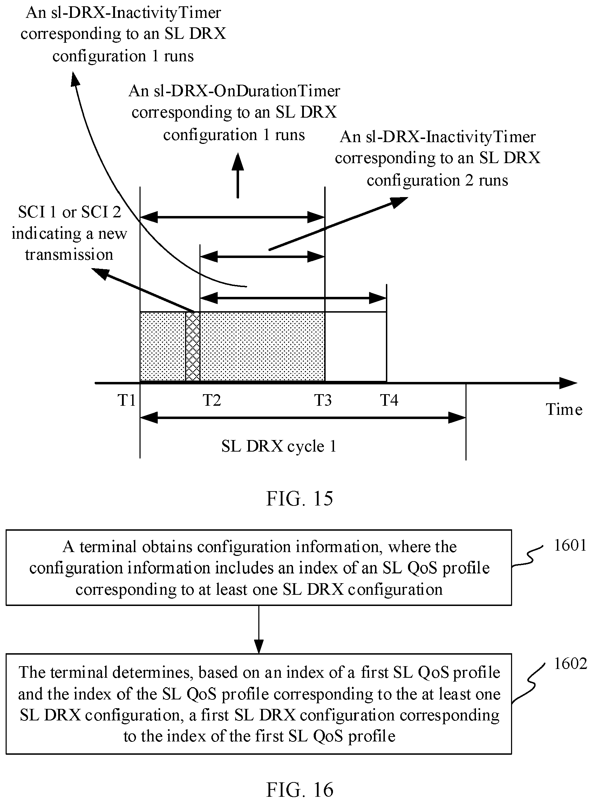

FIG. 15 is a schematic diagram of running times of an sl-DRX-OnDurationTimer and an sl-DRX-InactivityTimer that correspond to different SL DRX configurations. For example, FIG. 15 shows a running time of an sl-DRX-OnDurationTimer corresponding to an SL DRX configuration 1, a running time of an sl-DRX-InactivityTimer corresponding to the SL DRX configuration 1, a running time of an sl-DRX-OnDurationTimer corresponding to an SL DRX configuration 2, and a running time of an sl-DRX-InactivityTimer corresponding to the SL DRX configuration 2. The running time of the sl-DRX-OnDurationTimer corresponding to the SLDRX configuration 2 is the same as the running time of the sl-DRX-OnDurationTimer corresponding to the DRX configuration 1. The SL DRX configuration 1 corresponds to an SL QoS profile 1, and the SL DRX configuration 2 corresponds to an SL QoS profile 2. Based on the example in FIG. 15, when the terminal at the transmitter side sends, at an SL active time corresponding to the SL QoS profile 1, SCI 1 corresponding to the destination layer-2 ID and the SL QoS profile 1, and the SCI 1 does not include indication information indicating the SL QoS profile 1, the terminal at the receiver side starts one sl-DRX-InactivityTimer based on duration of the sl-DRX-InactivityTimer in the SL DRX configuration 1, and starts the other sl-DRX-InactivityTimer based on duration of the sl-DRX-InactivityTimer in the SL DRX configuration 2. In this case, the SL active time corresponding to the SL QoS profile 1 includes duration between T1 and T3 and duration between T2 and T4. In other words, the SL active time corresponding to the SL QoS profile 1 includes duration between T1 and T4. An SL active time corresponding to the SL QoS profile 2 includes the duration between T1 and T3 and duration between T2 and T3. In other words, the SL active time corresponding to the SL QoS profile 2 includes duration between T1 and T3. The SL active time corresponding to the destination layer-2 ID includes the duration between T1 and T3, the duration between T2 and T4, and the duration between T2 and T3. In other words, the SL active time corresponding to the destination layer-2 ID includes the duration between T1 and T4.

To resolve the second problem, embodiments of this application provide different solutions respectively corresponding to Embodiment 5 to Embodiment 9.

### Embodiment 5

In this solution, an SL DRX configuration is configured for a terminal at a granularity of an SL QoS profile.

FIG. 16 is a schematic diagram of a method for determining an SL DRX configuration according to an embodiment of this application. The method includes the following steps.

Step 1601: A terminal obtains configuration information, where the configuration information includes an index of an SL QoS profile corresponding to at least one SL DRX configuration.

The configuration information may be preconfigured, configured by a base station, configured by a core network element, or predefined in a protocol.

For example, the configuration information indicates the following correspondences:
a DRX configuration 1 corresponds to an index of an SL QoS profile 1 and an index of an SL QoS profile 2;
a DRX configuration 2 corresponds to an index of an SL QoS profile 3, an index of an SL QoS profile 4, an index of an SL QoS profile 5, and an index of an SL QoS profile 6; and
a DRX configuration 3 corresponds to an SL QoS profile 7.

In other words, the configuration information includes a list of indexes of SL QoS profiles corresponding to at least one SL DRX configuration.

For another example, the configuration information indicates the following correspondences:
a start of an index of an SL QoS profile corresponding to a DRX configuration 1 is 3, and a length of the index of the SL QoS profile is 2, in other words, indexes of SL QoS profiles corresponding to the DRX configuration 1 are 3 and 4;
a start of an index of an SL QoS profile corresponding to a DRX configuration 2 is 7, and a length of the index of the SL QoS profile is 1, in other words, an index of the SL QoS profile corresponding to the DRX configuration 2 is 7; and
a start of an index of an SL QoS profile corresponding to a DRX configuration 3 is 10, and a length of the index of the SL QoS profile is 3, in other words, indexes of SL QoS profiles corresponding to the DRX configuration 3 are 10, 11 and 12.

In other words, the configuration information includes a start and a length of an index of an SL QoS profile corresponding to at least one SL DRX configuration. A start value and a length value may be respectively indicated by two pieces of indication information. For example, indication information 1 indicates a start value of an index, and indication information 2 indicates a length value of an index. A start value and a length value may alternatively be indicated by a piece of indication information. The indication information indicates a value obtained by jointly encoding the start value and the length value. In this specification, the value is referred to as a start and length joint value, or may be referred to as a start and length indicator value (start and length indicator value, SLIV). It is assumed that a total quantity of indexes of SL QoS profiles is N, a start value is denoted as S, a length value is denoted as L, and a start and length joint value is denoted as M. If (L-1) is less than or equal to N/2, M=N×(L-1)+S; or if (L-1) is greater than N/2, M=N×(N-L+1)+(N-1-S). Herein, S is an integer greater than or equal to 0 and less than N, and L is an integer greater than 0 and less than or equal to (N-S).

In an implementation, the configuration information further indicates the at least one SL DRX configuration. To be specific, the at least one SL DRX configuration is configured by using the configuration information, and an index of an SL QoS profile corresponding to each SL DRX configuration in the at least one SL DRX configuration is further configured.

In another implementation, the at least one SL DRX configuration is not configured by using the configuration information, but the at least one SL DRX configuration is separately configured by using another piece of configuration information. In other words, the at least one SLDRX configuration is configured by using one piece of configuration information, and an index of an SL QoS profile corresponding to each SL DRX configuration in the at least one SL DRX configuration is configured by using another piece of configuration information.

Step 1602: The terminal determines, based on an index of a first SL QoS profile and the index of the SL QoS profile corresponding to the at least one SL DRX configuration, a first SL DRX configuration corresponding to the index of the first SL QoS profile.

According to the foregoing solution, the terminal may determine an SL DRX configuration corresponding to each SL QoS profile. For example, the terminal first determines the first SL QoS profile corresponding to the terminal or a service of the terminal, and determines the index of the first SL QoS profile. Then, the terminal may determine, based on the index of the first SL QoS profile and the index of the SL QoS profile corresponding to the at least one SL DRX configuration, the first SL DRX configuration corresponding to the index of the first SL QoS profile. The first SL DRX configuration is an SL DRX configuration corresponding to the first SL QoS profile.

In an implementation, an index of an SL QoS profile is indicated by a position of the SL QoS profile in SL QoS profiles corresponding to all SL RB configurations. The index of the SL QoS profile is determined based on a position of an SL RB configuration in an SL RB list and a position of the SL QoS profile in an SL QoS profile list included in the SL RB configuration. Indexes of the SL QoS profiles may be obtained by sequentially numbering SL QoS profiles first based on a position of the SL QoS profile in an SL QoS profile list included in an SL RB configuration, and then based on a position of the SL RB configuration in an SL RB list. Numbers may start from any integer greater than or equal to 0. The number may be increased by 1. For example, the SL RB configurations in the SL RB list are an SL RB configuration 1, an SL RB configuration 2, and an SL RB configuration 3 in sequence. The rest may be deduced by analogy. SL QoS profiles corresponding to the SLRB configuration 1 are sequentially numbered from 1 to N1 based on positions of the SL QoS profiles in the SL QoS profile list; SL QoS profiles corresponding to the SL RB configuration 2 are sequentially numbered from N1+1 to N2 based on positions of the SL QoS profiles in the SL QoS profile list; and SL QoS profiles corresponding to the SL RB configuration 3 are sequentially numbered from N2+1 to N3 based on positions of the SL QoS profiles in the SL QoS profile list. The rest may be deduced by analogy. Indexes of the SL QoS profiles are 1, ..., N1, N1+1, N1+2, ..., N2, N2+1, ..., N3, and ... in sequence. For example, the configuration information indicates the following correspondences:
a DRX configuration 1 corresponds to 1 and 3;
a DRX configuration 2 corresponds to 2, 4, 6, and 7; and
a DRX configuration 3 corresponds to 5.

Herein, 1, 2, ..., and 7 are indexes of SL QoS profiles.

In an implementation, an index of an SL QoS profile is indicated by an index of an SL RB configuration corresponding to the SL QoS profile and a position of the SL QoS profile in the SL QoS profiles corresponding to the SL RB configuration. SL QoS profiles are sequentially numbered based on positions of the SL QoS profiles in the SL QoS profile list included in the SL RB configuration. Numbers may start from any integer greater than or equal to 0. The number may be increased by 1. For example, SL QoS profiles corresponding to an SL RB configuration 1 are sequentially numbered from 1 to N1 based on positions of the SL QoS profiles in the SL QoS profile list; SL QoS profiles corresponding to an SL RB configuration 2 are sequentially numbered from 1 to N2 based on positions of the SL QoS profiles in the SL QoS profile list; and SL QoS profiles corresponding to an SLRB configuration 3 are sequentially numbered from 1 to N3 based on positions of the SL QoS profiles in the SL QoS profile list. The rest may be deduced by analogy. The SLRB configuration 1 is an SLRB configuration whose index is 1. The SLRB configuration 2 is an SL RB configuration whose index is 2. The SL RB configuration 3 is an SL RB configuration whose index is 3. For example, the configuration information indicates the following correspondences:
a DRX configuration 1 corresponds to ((1), (1, 2));
a DRX configuration 2 corresponds to ((1), (3, 4)); and
a DRX configuration 3 corresponds to ((2), (1, 3)).

Herein, ((X), (Y, Z)) represents an index of an SL QoS profile, X is an index of an SL RB configuration, and Y and Z are indexes of SL QoS profiles in the SL RB configuration. (1) in ((1), (1, 2)) indicates an SLRB configuration whose index is 1, namely, an SLRB configuration 1. (1, 2) in ((1), (1, 2)) indicates SL QoS profiles whose indexes are 1 and 2 and that correspond to the SLRB configuration 1. (1) in ((1), (3, 4)) indicates the SLRB configuration whose index is 1, namely, the SLRB configuration 1. (3, 4) in ((1), (3, 4)) indicates SL QoS profiles whose indexes are 3 and 4 and that correspond to the SL RB configuration 1. (2) in ((2), (1, 3)) indicates an SL RB configuration whose index is 2, namely, an SL RB configuration 2. (1, 3) in ((2), (1, 3)) indicates SL QoS profiles whose indexes are 1 and 3 and that correspond to the SL RB configuration 2.

For another example, the configuration information indicates the following correspondences:
a DRX configuration 1 corresponds to (1, 1), and (1, 2);
a DRX configuration 2 corresponds to (1, 3), (1, 4), and (2, 2); and
a DRX configuration 3 corresponds to (2,1), and (2, 3).

Herein, (X, Y) represents an index of an SL QoS profile, X is an index of an SL RB configuration, and Y are the index of the SL QoS profile in the SL RB configuration.

In an implementation, indexes of SL QoS profiles corresponding to the SL RB configuration may be carried in SL RB configurations. In this case, when receiving the SL RB configuration and the SL QoS profiles corresponding to the SL RB configuration, the terminal may obtain correspondences between the SL QoS profiles and the indexes of the SL QoS profiles. In a manner, the index of the SL QoS profile is carried in the SL QoS profiles corresponding to the SL RB configuration. Different SLRB configurations correspond to different SL QoS profile indexes. Subsequently, the SL QoS profiles indicated by the indexes of the SL QoS profiles in the configuration information may be obtained by using the configuration information in step 1601.

In an implementation, indexes of SL QoS profiles corresponding to the SL RB configuration in the SL RB configuration may be carried in SL RB configurations. In this case, when receiving the SL RB configuration and the SL QoS profiles corresponding to the SL RB configuration, the terminal may obtain correspondences between the SL QoS profiles and the indexes of the SL QoS profiles in the SL RB configuration. In a manner, the index of the SL QoS profile in the SL RB configuration is carried in the SL QoS profiles corresponding to the SL RB configuration. SL QoS profiles corresponding to different SL RB configurations may have a same index in the SL RB configuration. An index of an SL QoS profile is indicated by an index of an SL RB configuration corresponding to the SL QoS profile and a position of the SL QoS profile in the SL RB configuration. Subsequently, the SL QoS profiles indicated by the indexes of the SL QoS profiles in the configuration information may be obtained by using the configuration information in step 1601.

According to the foregoing solution, the configuration information carries an index of an SL QoS profile corresponding to each SL DRX configuration instead of carrying an SL QoS profile, so that signaling overheads and storage overheads can be reduced.

### Embodiment 6

In this solution, an SL DRX configuration is configured for a terminal at a granularity of a PQI.

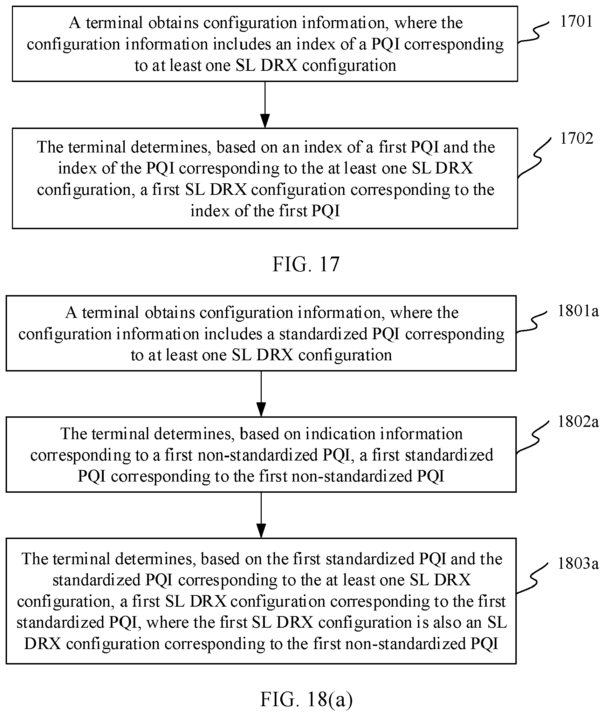

FIG. 17 is a schematic diagram of a method for determining an SL DRX configuration according to an embodiment of this application. The method includes the following steps.

Step 1701: A terminal obtains configuration information, where the configuration information includes an index of a PQI corresponding to at least one SL DRX configuration.

The configuration information may be preconfigured, configured by a base station, configured by a core network element, or predefined in a protocol.

For example, the configuration information indicates the following correspondences:
a DRX configuration 1 corresponds to an index of a PQI 1 and an index of a PQI 2;
a DRX configuration 2 corresponds to an index of a PQI 3, an index of a PQI 4, an index of a PQI 5, and an index of a PQI 6; and
a DRX configuration 3 corresponds to an index of a PQI 7.

In an implementation, the configuration information further indicates the at least one SL DRX configuration. To be specific, the at least one SL DRX configuration is configured by using the configuration information, and an index of a PQI corresponding to each SL DRX configuration in the at least one SL DRX configuration is further configured.

In another implementation, the at least one SL DRX configuration is not configured by using the configuration information, but the at least one SL DRX configuration is separately configured by using another piece of configuration information. In other words, the at least one SLDRX configuration is configured by using one piece of configuration information, and an index of a PQI corresponding to each SL DRX configuration in the at least one SL DRX configuration is configured by using another piece of configuration information.

Step 1702: The terminal determines, based on an index of a first PQI and the index of the PQI corresponding to the at least one SL DRX configuration, a first SL DRX configuration corresponding to the index of the first PQI.

According to the foregoing solution, the terminal may determine an SL DRX configuration corresponding to each PQI. For example, the terminal first determines the first PQI corresponding to the terminal or a service of the terminal, and determines the index of the first PQI. Then, the terminal may determine, based on the index of the first PQI and the index of the PQI corresponding to the at least one SL DRX configuration, an SL DRX configuration corresponding to the index of the first PQI. The SL DRX configuration is the first SL DRX configuration corresponding to the first PQI.

The PQI herein may be a standardized PQI or a non-standardized PQI.

For a standardized PQI, a value of the standardized PQI may be used as an index of the standardized PQI. Alternatively, an index of a standardized PQI is an index of an SL QoS profile including the standardized PQI, and the index of the SL QoS profile is described in Embodiment 5.

For a non-standardized PQI, an index of the non-standardized PQI is an index of an SL QoS profile including the non-standardized PQI, and the index of the SL QoS profile is described in Embodiment 5. Alternatively, an index of a non-standardized PQI may be indicated by any one of the following methods:

Method A: The index of the non-standardized PQI is indicated by a position of an SL QoS profile including the non-standardized PQI in SL QoS profiles corresponding to all SL RB configurations.

For example, SLRB configurations in an SLRB list are an SLRB configuration 1, an SL RB configuration 2, and an SL RB configuration 3 in sequence. The rest may be deduced by analogy. SL QoS profiles corresponding to the SL RB configuration 1 are sequentially numbered from 1 to N1 based on positions of the SL QoS profiles in an SL QoS profile list; SL QoS profiles corresponding to the SL RB configuration 2 are sequentially numbered from N1+1 to N2 based on positions of the SL QoS profiles in the SL QoS profile list; and SL QoS profiles corresponding to the SL RB configuration 3 are sequentially numbered from N2+1 to N3 based on positions of the SL QoS profiles in the SL QoS profile list. The rest may be deduced by analogy. The indexes of the SL QoS profiles are 1, ..., N1, N1+1, N1+2, ..., N2, N2+1, ..., N3, and ... in sequence. In addition, an index of a non-standardized PQI included in an SL QoS profile whose index is i is i, and a value of i is 1, 2, 3, and ....

For example, the configuration information indicates the following correspondences:
a DRX configuration 1 corresponds to 1 and 3;
a DRX configuration 2 corresponds to 2, 4, and 6; and
a DRX configuration 3 corresponds to 5, and 7.

Herein, 1, 2, ..., and 7 are indexes of non-standardized PQIs.

Method B: The index of the non-standardized PQI is indicated by an index of an SL RB configuration corresponding to an SL QoS profile including the non-standardized PQI and a position of the SL QoS profile in the SL QoS profiles corresponding to the SL RB configuration.

For example, SL QoS profiles corresponding to an SL RB configuration 1 are sequentially numbered from 1 to N1 based on positions of the SL QoS profiles in the SL QoS profile list; SL QoS profiles corresponding to an SLRB configuration 2 are sequentially numbered from 1 to N2 based on positions of the SL QoS profiles in the SL QoS profile list; and SL QoS profiles corresponding to an SLRB configuration 3 are sequentially numbered from 1 to N3 based on positions of the SL QoS profiles in the SL QoS profile list. The rest may be deduced by analogy. The SLRB configuration 1 is an SLRB configuration whose index is 1. The SL RB configuration 2 is an SL RB configuration whose index is 2. The SL RB configuration 3 is an SL RB configuration whose index is 3. In addition, an index of a non-standardized PQI included in an SL QoS profile whose index is i in an SL RB configuration is i, and a value of i is 1, 2, 3, and ....

For example, the configuration information indicates the following correspondences:
a DRX configuration 1 corresponds to (1, 1), and (1, 2);
a DRX configuration 2 corresponds to (1, 3), (1, 4), and (2, 2); and
a DRX configuration 3 corresponds to (2,1), and (2, 3).

Herein, (X, Y) represents an index of a non-standardized PQI, X is an index of an SL RB configuration, and Y is the index of the non-standardized PQI in the SL RB configuration.

Method C: The index of the non-standardized PQI is an index of the non-standardized PQI included in an SL RB configuration. In a manner, the index of the non-standardized PQI is included in the non-standardized PQI. In other words, an index is added to the non-standardized PQI.

A value of the index may overlap a value of a standardized PQI, or may not overlap values of all standardized PQIs. If the index of the non-standardized PQI overlaps a value of a specific standardized PQI, whether the PQI is a standardized PQI or a non-standardized PQI further needs to be indicated in the configuration information, or a standardized PQI and a non-standardized PQI are separately indicated.

For example, a field "PqiIndex" is added to the non-standardized PQI, to indicate the index of the non-standardized PQI.

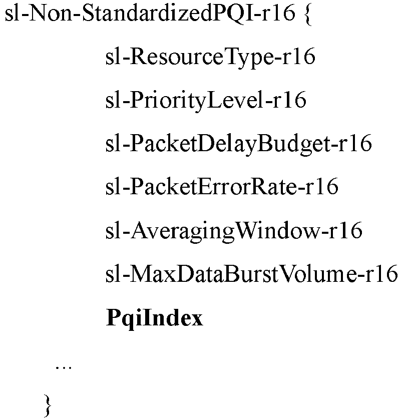

Method D: The index of the non-standardized PQI is indicated by an index of an SL RB configuration corresponding to an SL QoS profile including the non-standardized PQI and an index of the non-standardized PQI in the SL RB configuration.

The index of the non-standardized PQI in the SL RB configuration may be carried in SL RB configurations. In a manner, the index of the non-standardized PQI in the SL RB configuration is included in the non-standardized PQI. A value of the index of the non-standardized PQI may overlap a value of a standardized PQI, or may not overlap values of all standardized PQIs. If the index of the non-standardized PQI overlaps a value of a specific standardized PQI, whether the PQI is a standardized PQI or a non-standardized PQI further needs to be indicated in the configuration information, or a standardized PQI and a non-standardized PQI are separately indicated.

According to the foregoing solution, the configuration information carries an index of a PQI corresponding to each SL DRX configuration instead of carrying a PQI, signaling overheads and storage overheads can be reduced.

### Embodiment 7

FIG. 18(a) is a schematic diagram of a method for determining a DRX configuration according to an embodiment of this application. The method includes the following steps.

Step 1801a: A terminal obtains configuration information, where the configuration information includes a standardized PQI corresponding to at least one SL DRX configuration.

Step 1802a: The terminal determines, based on indication information corresponding to a first non-standardized PQI, a first standardized PQI corresponding to the first non-standardized PQI.

The indication information indicates the first standardized PQI corresponding to a same SL DRX configuration as the first non-standardized PQI. In other words, the indication information indicates the first standardized PQI, and the first standardized PQI and the first non-standardized PQI correspond to the same SL DRX configuration.

Step 1803a: The terminal determines, based on the first standardized PQI and the standardized PQI corresponding to the at least one SL DRX configuration, a first SL DRX configuration corresponding to the first standardized PQI, where the first SL DRX configuration is also an SL DRX configuration corresponding to the first non-standardized PQI.

According to the foregoing solution, the standardized PQI and the non-standardized PQI that correspond to the same SL DRX configuration are associated with each other by using the indication information, and therefore the SL DRX configuration corresponding to the non-standardized PQI can be determined.

In this embodiment, if the SL DRX configuration corresponding to the non-standardized PQI is the same as an SL DRX configuration corresponding to a specific standardized PQI, the non-standardized PQI may correspond to one piece of indication information. In a specific implementation, the indication information may be added to the non-standardized PQI. The indication information indicates the standardized PQI that uses the same SL DRX configuration as the non-standardized PQI. In this way, the configuration information is not required for configuring a mapping relationship between the non-standardized PQI and the SL DRX configuration, so that signaling overheads and storage overheads can be reduced.

For example, sl-Non-StandardizedPQI-r16 indicates information included in the non-standardized PQI, and SameDRXstandardizedPQI is added to sl-Non-StandardizedPQI-r16 to indicate a standardized PQI. An SL DRX configuration corresponding to the standardized PQI is the same as an SL DRX configuration corresponding to the non-standardized PQI.

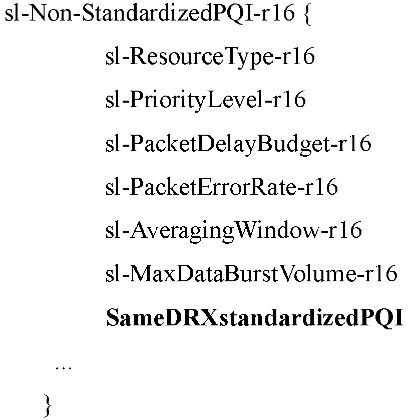

According to the foregoing solution, the SL DRX configuration corresponding to the non-standardized PQI is the same as the SLDRX configuration corresponding to the standardized PQI, instead of configuring the mapping relationship between the non-standardized PQI and the SL DRX configuration by using additional configuration information, so that signaling overheads and storage overheads are reduced.

### Embodiment 8

A non-standardized PQI corresponds to a default (default) SL DRX configuration or a common (common) SLDRX configuration. The default SL DRX configuration or the common SL DRX configuration may be sent by a base station, or may be preconfigured. The default SL DRX configuration or the common SL DRX configuration may be dedicated to the non-standardized PQI, or may not be dedicated. For example, the default SL DRX configuration corresponding to the non-standardized PQI may be the same as a unicast, broadcast, or multicast default SL DRX configuration or common SL DRX configuration, or the common SL DRX configuration corresponding to the non-standardized PQI may be the same as a unicast, broadcast, or multicast default SL DRX configuration or common SL DRX configuration.

According to the solution, the non-standardized PQI corresponds to a same default SL DRX configuration or common SL DRX configuration, so that signaling overheads and storage overheads are reduced.

### Embodiment 9

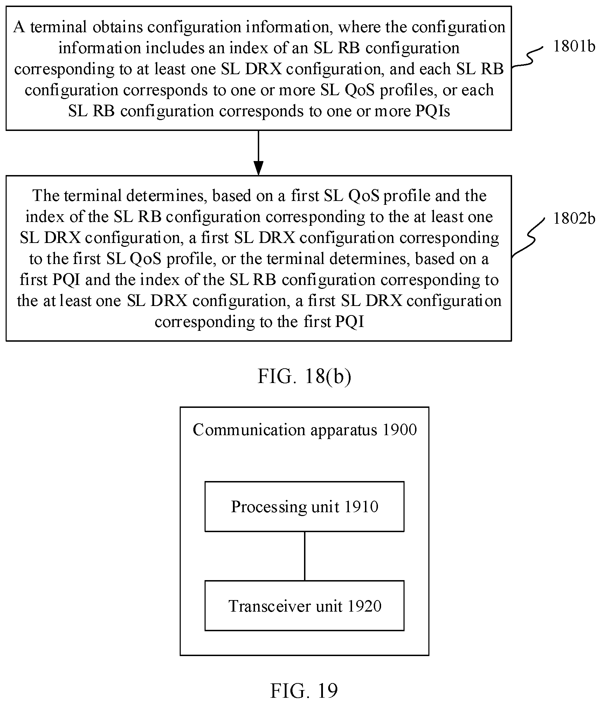

FIG. 18(b) is a schematic diagram of a method for determining a DRX configuration according to an embodiment of this application. The method includes the following steps.

Step 1801b: A terminal obtains configuration information, where the configuration information includes an index of an SL RB configuration corresponding to at least one SL DRX configuration, and each SL RB configuration corresponds to one or more SL QoS profiles, or each SL RB configuration corresponds to one or more PQIs.

The configuration information may be preconfigured, configured by a base station, configured by a core network element, or predefined in a protocol.

For example, the configuration information indicates the following correspondences:
a DRX configuration 1 corresponds to an index of an SL RB configuration 1 and an index of an SL RB configuration 2;
a DRX configuration 2 corresponds to an index of an SL RB configuration 3, an index of an SL RB configuration 4, an index of an SL RB configuration 5, and an index of an SL RB configuration 6; and
a DRX configuration 3 corresponds to an index of an SL RB configuration 7.

In an implementation, the configuration information further indicates the at least one SL DRX configuration. To be specific, the at least one SL DRX configuration is configured by using the configuration information, and an index of a PQI corresponding to each SL DRX configuration in the at least one SL DRX configuration is further configured.

In another implementation, the at least one SL DRX configuration is not configured by using the configuration information, but the at least one SL DRX configuration is separately configured by using another piece of configuration information. In other words, the at least one SLDRX configuration is configured by using one piece of configuration information, and an index of a PQI corresponding to each SL DRX configuration in the at least one SL DRX configuration is configured by using another piece of configuration information.

The SL RB configuration may be preconfigured, configured by the base station, configured by the core network element, or predefined in the protocol. The SL RB configuration may be configured by using the configuration information in step 1801b, or may be separately configured by using other configuration information.

Step 1802b: The terminal determines, based on a first SL QoS profile and the index of the SL RB configuration corresponding to the at least one SL DRX configuration, a first SL DRX configuration corresponding to the first SL QoS profile; or the terminal determines, based on a first PQI and the index of the SL RB configuration corresponding to the at least one SL DRX configuration, a first SL DRX configuration corresponding to the first PQI.

According to the foregoing solution, the terminal may determine an SL DRX configuration corresponding to each SL QoS profile. For example, for the first SL QoS profile corresponding to the terminal or a service of the terminal, the terminal first determines a first SL RB configuration corresponding to the first SL QoS profile, and determines an index of the first SL RB configuration. Then, the terminal may determine, based on the index of the first SL RB configuration and the index of the SL RB configuration corresponding to the at least one SL DRX configuration, an SL DRX configuration corresponding to the index of the first SL RB configuration. The SL DRX configuration is the first SL DRX configuration corresponding to the first SL QoS profile. For another example, for the first PQI corresponding to the terminal or a service of the terminal, the terminal first determines a first SL RB configuration corresponding to the first PQI, and determines an index of the first SL RB configuration. Then, the terminal may determine, based on the index of the first SL RB configuration and the index of the SL RB configuration corresponding to the at least one SL DRX configuration, an SL DRX configuration corresponding to the index of the first SL RB configuration. The SL DRX configuration is the first SL DRX configuration corresponding to the first PQI.

Alternatively, the terminal may determine, based on an index of a first SL RB configuration and the index of the SL RB configuration corresponding to the at least one SL DRX configuration, a first SL DRX configuration corresponding to the index of the first SL RB configuration.

According to the solution, the terminal may determine the index of the first SL RB configuration, and then determine, based on the index of the first SL RB configuration and the index of the SL RB configuration corresponding to the at least one SL DRX configuration, the first SL DRX configuration corresponding to the index of the first SL RB configuration.

An index of an SL RB configuration may be indicated by a position of the SL RB configuration in all SLRB configurations. Alternatively, an index of an SLRB configuration may be an index of the SL RB configuration included in the SL RB configuration.

The following provides descriptions with reference to an example.

An SL RB configuration 1 corresponds to an SL QoS profile 1 and an SL QoS profile 2;
an SL RB configuration 2 corresponds to an SL QoS profile 3 and an SL QoS profile 4;
an SLRB configuration 3 corresponds to an SL QoS profile 5; and
an SL RB configuration 4 corresponds to an SL QoS profile 6 and an SL QoS profile 7.

For example, the configuration information indicates the following correspondences:
a DRX configuration 1 corresponds to 1 and 2; and
a DRX configuration 2 corresponds to 3 and 4.

Herein, 1, 2, 3, and 4 are indexes of the SLRB configuration 1, the SLRB configuration 2, the SL RB configuration 3, and the SL RB configuration 4 respectively. In this case, the configuration information indicates that the DRX configuration 1 corresponds to the SL RB configuration 1 and the SLRB configuration 2, and therefore the DRX configuration 1 corresponds to the SL QoS profile 1, the SL QoS profile 2, the SL QoS profile 3 and the SL QoS profile 4; and that the DRX configuration 2 corresponds to the SL RB configuration 3 and the SL RB configuration 4, and therefore the DRX configuration 2 corresponds to the SL QoS profile 5, the SL QoS profile 6 and the SL QoS profile 7.

In an implementation, if an SL DRX configuration and an SL RB configuration are in a one-to-one correspondence based on a position of the SL DRX configuration in an SL DRX configuration list and a position of the SL RB configuration in an SL RB list. In other words, SL RB configurations in the SL RB list are the SL RB configuration 1, the SL RB configuration 2, and the SL RB configuration 3 in sequence. The rest may be deduced by analogy. SL DRX configurations in the SL DRX configuration list are an SL DRX configuration 1, an SL DRX configuration 2, and an SL DRX configuration 3 in sequence. The rest may be deduced by analogy. In this case, the SL DRX configuration 1 corresponds to the SL RB configuration 1, and the SL DRX configuration 2 corresponds to the SL RB configuration 2. The rest may be deduced by analogy. In this way, the configuration information is not required for configuring an SL RB configuration corresponding to each SL DRX configuration. The foregoing example is used as an example. For example, if the terminal is configured with the correspondences between the SL RB configurations and the SL QoS profiles, and the DRX configuration 1 and the DRX configuration 2 are configured, the terminal may determine that the DRX configuration 1 corresponds to the SL QoS profile 1 and the SL QoS profile 2, and the DRX configuration 2 corresponds to the SL QoS profile 3 and the SL QoS profile 4.

In the foregoing embodiment, SL QoS profile/PQIs corresponding to an SL DRX configuration are SL QoS profile/PQIs of one or more SL RB configurations. Therefore, in an implementation, if an SL DRX configuration corresponding to an SL QoS profile/PQI needs to be configured, an SL RB configuration corresponding to the SL QoS profile/PQI needs to be met.

In another implementation, if an SL QoS profile/PQI does not have a corresponding SL RB configuration, the SL QoS profile/PQI corresponds to a default (default) SL DRX configuration or a common (common) SL DRX configuration. For example, the default SL DRX configuration or the common SL DRX configuration is a unicast, broadcast, or multicast default SL DRX configuration or common SL DRX configuration.

In another implementation, an SL QoS profile/PQI corresponding to each SL DRX configuration may be indicated by an index in the foregoing embodiment, or may be indicated by an SL QoS profile/PQI. If an SL QoS profile/PQI corresponding to an SL DRX configuration is an SL QoS profile/PQI in an SL RB configuration, the SL QoS profile/PQI is indicated by an index in the foregoing embodiment. If an SL QoS profile/PQI corresponding to an SL DRX configuration is not an SL QoS profile/PQI in any SL RB configuration, the SL QoS profile/PQI is indicated by an SL QoS profile/PQI.

According to the foregoing solution, the configuration information carries an index of an SL RB configuration corresponding to each SL DRX configuration instead of carrying an SL QoS profile, so that signaling overheads and storage overheads can be reduced.

In another implementation, when an SL DRX configuration and an SL RB configuration are in a one-to-one correspondence, and the correspondence is preconfigured on the terminal, step 1801b may not be performed. In this case, the terminal may determine a corresponding first SL RB configuration based on a first SL QoS profile or a first PQI, and then determine a first SL DRX configuration corresponding to the first SL RB configuration. The first SL DRX configuration is an SL DRX configuration corresponding to the first SL QoS profile or an SL DRX configuration corresponding to the first PQI.

### Embodiment 10

In this solution, an SL DRX configuration is configured for a terminal at a granularity of an SL QoS profile.

In a schematic diagram of a method for determining an SL DRX configuration according to Embodiment 10 of this application, the method includes the following steps.

A terminal obtains configuration information, where the configuration information indicates (or includes) an SL DRX configuration corresponding to at least one SL QoS profile, or in other words, the configuration information indicates (or includes) a correspondence between at least one SL QoS profile and an SL DRX configuration.

The configuration information may be preconfigured, configured by a base station, configured by a core network element, or predefined in a protocol.

For example, the configuration information indicates the following correspondences:
an SL QoS profile 1 corresponds to an SL DRX configuration 1;
an SL QoS profile 2 corresponds to an SL DRX configuration 2; and
an SL QoS profile 3 corresponds to an SL DRX configuration 3.

In an implementation, the configuration information further indicates the at least one SL QoS profile. To be specific, the at least one SL QoS profile is configured by using the configuration information, and the SL DRX configuration corresponding to the at least one SL QoS profile is further configured.

For example, the configuration information includes one or more SL-QoS-Profile, where each SL-QoS-Profile includes one or more of a PQI, a GFBR, an MFBR, or a range, and includes an SLDRX configuration. The SL-QoS-Profile is shown as follows.

```
          SL-QoS-Profile ::= SEQUENCE {
               PQI
               GFBR
               MFBR
               Range
               SL DRX configuration }
```

In an implementation, the SL DRX configuration is an enumerated type (ENUMERATED). For example, in a case in which the SL DRX configuration includes an sl-DRX-InactivityTimer, the sl-DRX-InactivityTimer is ENUMERATED {ms0, ms1, ms2, ms3, ms4, ms5, ms6, ms8, ms10, ms20, ms30, ms40, ms50, ms60, ms80, ms100, ms200, ms300, ms500, ms750, ms1280, ms1920, ms2560, spare9, spare8, spare7, spared, spared, spare4, spare3, spare2, spare1}. In other words, a value of the sl-DRX-InactivityTimer is one of values in the bracket. The values in the bracket are integer multiples of 1 ms. Herein, ms0 indicates 0, ms1 indicates 1 ms, and ms2 indicates 2 ms. The rest may be deduced by analogy. Herein, spare is an idle value, or may be understood as an unused value.

For another example, in a case in which the SLDRX configuration includes an SLDRX cycle, the SLDRX cycle is ENUMERATED {ms 10, ms20, ms32, ms40, ms60, ms64, ms70, ms80, ms128, ms160, ms256, ms320, ms512, ms640, ms1024, ms1280, ms2048, ms2560, ms5120, ms10240, spare12, spare11, spare10, spare9, spare8, spare7, spare6, spare5, spared, spare3, spare2, spare1}. In other words, a value of the SL DRX cycle is one of values in the bracket. A unit of the value in the bracket is ms. Herein, ms10 indicates 10 ms, and ms20 indicates 20 ms. The rest may be deduced by analogy. Herein, spare is an idle value, or may be understood as an unused value.

In an implementation, the SL DRX configuration is a choice type (CHOICE). For example, in a case in which the SLDRX configuration includes an sl-DRX-OnDurationTimer, the sl-DRX-OnDurationTimer is CHOICE {subMilliSeconds, milliSeconds}. Herein, subMilliSeconds is an integer type (INTEGER), a value range is 1 to 31, a unit is 1/32 ms. In other words, 1 indicates 1/32 ms, and 2 indicates 2/32 ms. The rest may be deduced by analogy. Herein, milliSeconds is an enumerated type, a value range is, for example, {ms 1, ms2, ms3, ms4, ms5, ms6, ms8, ms10, ms20, ms30, ms40, ms50, ms60, ms80, ms100, ms200, ms300, ms400, ms500, ms600, ms800, ms1000, ms1200, ms1600, spare8, spare7, spared, spared, spared, spare3, spare2, spare1}, and a unit is ms. Herein, ms1 indicates 1 ms, and ms2 indicates 2 ms. The rest may be deduced by analogy. Herein, spare is an idle value, or may be understood as an unused value.

According to the foregoing solution, compared with a manner that an SL QoS profile is carried in each SL DRX configuration, in this manner, the configuration information carries the SL DRX configuration corresponding to the at least one SL QoS profile, so that signaling overheads and storage overheads can be reduced.

In a case in which no conflict occurs, the solution in Embodiment 10 may be used in combination with that in another embodiment.

### Embodiment 11

In this solution, an SL DRX configuration is configured for a terminal at a granularity of an SL QoS profile.

In a schematic diagram of a method for determining an SL DRX configuration according to Embodiment 11 of this application, the method includes the following steps.

Step 1X01: a terminal obtains configuration information, where the configuration information includes an index of an SL DRX configuration corresponding to at least one SL QoS profile, or in other words, the configuration information includes a correspondence between at least one SL QoS profile and an index of an SL DRX configuration.

The configuration information may be preconfigured, configured by a base station, configured by a core network element, or predefined in a protocol.

For example, the configuration information indicates the following correspondences:
an index of an SL DRX configuration corresponding to an SL QoS profile 1 is 3;
an index of an SL DRX configuration corresponding to an SL QoS profile 2 is 1; and
an index of an SL DRX configuration corresponding to an SL QoS profile 3 is 3.

In an implementation, the configuration information further indicates the at least one SL QoS profile. To be specific, the at least one SL QoS profile is configured by using the configuration information, and the index of the SLDRX configuration corresponding to the at least one SL QoS profile is further configured.

In an implementation, the configuration information further indicates at least one SL DRX configuration. To be specific, the at least one SLDRX configuration is configured by using the configuration information, and the index of the SL DRX configuration corresponding to the at least one SL QoS profile is further configured.

In another implementation, at least one SL DRX configuration is not configured by using the configuration information, but the at least one SL DRX configuration is separately configured by using another piece of configuration information. In other words, the at least one SL DRX configuration is configured by using one piece of configuration information, and the index of the SL DRX configuration corresponding to the at least one SL QoS profile is configured by using another piece of configuration information.

Step 1X02: The terminal determines, based on a first SL QoS profile and the index of the SL DRX configuration corresponding to the at least one SL QoS profile, a first SL DRX configuration corresponding to the first SL QoS profile.

Specifically, the terminal determines, based on the first SL QoS profile and the index of the SLDRX configuration corresponding to the at least one SL QoS profile, an index of the first SL DRX configuration corresponding to the first SL QoS profile. Then, the terminal determines that the first SL DRX configuration corresponding to the first SL QoS profile is an SL DRX configuration whose index is the index of the first SL DRX configuration.

According to the foregoing solution, the terminal may determine an SL DRX configuration corresponding to the terminal or a service of the terminal. For example, the terminal first determines the first SL QoS profile corresponding to the terminal or the service of the terminal, and then determines, based on the first SL QoS profile, an SL DRX configuration corresponding to the first SL QoS profile.

In an implementation, an index of an SL DRX configuration is indicated by a position of the SL DRX configuration in an SL DRX configuration list. For example, SL DRX configurations in the SL DRX configuration list are an SL DRX configuration 1, an SL DRX configuration 2, an SLDRX configuration 3, ..., and an SLDRX configuration N in sequence. The rest may be deduced by analogy. In this case, indexes of the SL DRX configurations are 1, 2, 3, ..., and N in sequence. For example, the configuration information indicates the following correspondences:
an SL QoS profile 1 corresponds to 3;
an SL QoS profile 2 corresponds to 1; and
an SL QoS profile 3 corresponds to 3.

Herein, 1, 2, and 3 are indexes of SL DRX configurations.

In an implementation, the configuration information further indicates the at least one SL QoS profile. To be specific, the at least one SL QoS profile is configured by using the configuration information, and the index of the SLDRX configuration corresponding to the at least one SL QoS profile is further configured.

For example, the configuration information includes one or more SL-QoS-Profiles, where each SL-QoS-Profile includes one or more of a PQI, a GFBR, an MFBR, or a range, and includes an index of an SL DRX configuration. The SL-QoS-Profile is shown as follows.

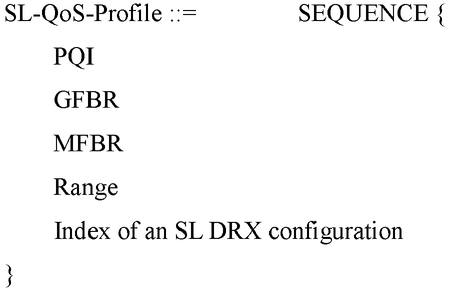

According to the foregoing solution, compared with a manner that an SL QoS profile is carried in each SL DRX configuration, in this manner, the configuration information carries the index of the SL DRX configuration corresponding to the at least one SL QoS profile, so that signaling overheads and storage overheads can be reduced.

In a case in which no conflict occurs, the solution in Embodiment 11 may be used in combination with that in another embodiment. It should be noted that, in an implementation, a correspondence between a standardized PQI and an SL DRX configuration may be further configured by using configuration information. If a PQI corresponding to sidelink unicast communication is a standardized PQI, both a terminal on a transmitter side and a terminal on a receiver side determine a same SL DRX configuration based on the configuration information. If a PQI corresponding to sidelink unicast communication is a non-standardized PQI, a terminal on one side may determine an SL DRX configuration, and send, to a terminal on the other side, indication information indicating the SL DRX configuration. If a PQI corresponding to sidelink unicast communication includes a standardized PQI and a non-standardized PQI, a terminal on one side may determine an SL DRX configuration, and send, to a terminal on the other side, indication information indicating the SL DRX configuration.

In an implementation, a correspondence between an SL QoS profile/PQI and a value range of an SL DRX parameter may be further configured by using configuration information. For example, the value range of the SL DRX parameter includes, for example, that a value range of an sl-DRX-OnDurationTimer is 2 ms to 10 ms, and a value range of an sl-DRX-InactivityTimer is 0 ms to 8 ms. A terminal on one side determines an SL DRX configuration based on a QoS profile/PQI corresponding to sidelink unicast communication, where a value of an SL DRX parameter included in the determined SL DRX configuration falls within a value range of the SL DRX parameter corresponding to the QoS profile/PQI. The terminal sends, to a terminal on the other side, indication information indicating the SL DRX configuration. In the information about the SL DRX configuration, the QoS profile/PQI may be indicated by an index of a QoS profile/PQI described in Embodiment 5 to Embodiment 9.

It should be noted that a relationship between Embodiment 1 to Embodiment 4 and Embodiment 5 to Embodiment 9 is that a correspondence between an SL DRX configuration and a QoS profile/PQI may be configured for the terminal by using Embodiment 5 to Embodiment 9, and the correspondence may be subsequently used. For example, for a destination layer-2 ID, the terminal has only one service corresponding to the destination layer-2 ID, and the service corresponds to one QoS profile/PQI. In this case, the terminal may determine, based on the QoS profile/PQI and the correspondence, an SL DRX configuration corresponding to the QoS profile/PQI. Subsequently, the terminal uses the SL DRX configuration. For another example, for a destination layer-2 ID, the terminal has a plurality of services corresponding to the destination layer-2 ID, and each service corresponds to one QoS profile/PQI. In this case, the terminal may determine a plurality of QoS profiles/PQIs corresponding to the destination layer-2 ID, and then the terminal determines at least two SL DRX configurations based on the plurality of QoS profiles/PQIs and the correspondence. Further, the terminal may determine, by using any method in Embodiment 1 to Embodiment 4, an SL DRX configuration for use in the at least two SL DRX configurations.

In an implementation, if a plurality of PQIs are associated with one destination layer-2 ID, two manners may be considered. In the manner 1, one target PQI is first selected from the plurality of PQIs associated with the destination layer-2 ID. For example, a PQI with a lowest priority and/or a smallest PDB is selected. Then, an SL DRX configuration corresponding to the target PQI is selected as an SL DRX configuration for use. In other words, the SL DRX configuration corresponding to the target PQI is used in the destination layer-2 ID. In the manner 2, a plurality of SL DRX configurations corresponding to the plurality of PQIs are first determined based on the plurality of PQIs associated with the destination layer-2 ID, and then one target SL DRX configuration is selected from the plurality of SL DRX configurations. For example, the selected target SL DRX configuration is an SL DRX configuration with a smallest SL DRX cycle in the plurality of SL DRX configurations.

It can be understood that, to implement functions in the foregoing embodiment, a base station and a terminal includes corresponding hardware structures and/or software modules for performing the functions. A person skilled in the art should be easily aware that, in combination with the units and the method steps in the examples described in the embodiments disclosed in this application, this application can be implemented by using hardware or a combination of hardware and computer software. Whether a function is performed by using hardware or hardware driven by computer software depends on particular application scenarios and design constraints of the technical solutions.

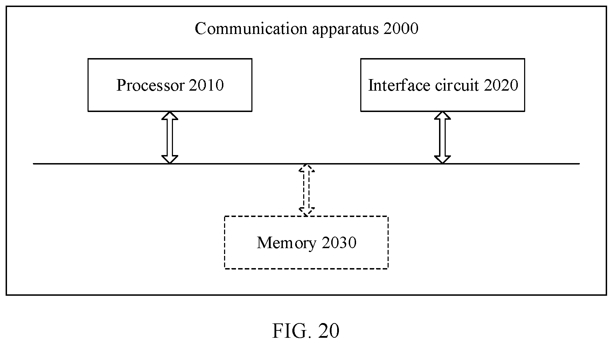

FIG. 19 and FIG. 20 each are a schematic diagram of a structure of a possible communication apparatus according to an embodiment of this application. The communication apparatuses may be configured to implement the functions of the terminal or the base station in the foregoing method embodiments. Therefore, beneficial effects of the foregoing method embodiments can also be achieved. In this embodiment of this application, the communication apparatus may be one of the terminals 120a to 120j shown in FIG. 1, or may be the base station 110a or 110b shown in FIG. 1, or may be a module (for example, a chip) used in a terminal or a base station.

As shown in FIG. 19, a communication apparatus 1900 includes a processing unit 1910 and a transceiver unit 1920. The communication apparatus 1900 is configured to implement functions of the terminal in Embodiment 1 to Embodiment 9.

In a first embodiment, the processing unit 1910 is configured to: determine at least two PQIs or sidelink QoS profiles corresponding to a service of a terminal; determining at least two sidelink DRX configurations corresponding to the at least two PQIs or sidelink QoS profiles, where each sidelink DRX configuration indicates one or more sidelink DRX parameters; and determining a sidelink DRX configuration for use based on the at least two sidelink DRX configurations.

In a possible implementation, the sidelink DRX configuration for use is a first sidelink DRX configuration, and the first sidelink DRX configuration is one of the at least two sidelink DRX configurations.

In a possible implementation, a value of a first parameter in the first sidelink DRX configuration is a smallest value or a largest value in values of first parameters in the at least two sidelink DRX configurations. The first parameter is any one of the following parameters: a value of an sl-DRX-OnDurationTimer, a value of an sl-DRX-InactivityTimer, a value of an sl-DRX-HARQ-RTT-Timer, a value of an sl-DRX-RetransmissionTimer, a value of an SL DRX cycle, a value of an sl-DRX-startOffset, or a value of an sl-DRX-slotOffset.

In a possible implementation, in a case in which values of first parameters in a plurality of sidelink DRX configurations in the at least two sidelink DRX configurations are smallest values or largest values, when a value of a second parameter in only one sidelink DRX configuration in the plurality of sidelink DRX configurations is the smallest or the largest, the processing unit 1910 is configured to determine the sidelink DRX configuration as the first sidelink DRX configuration; or when values of second parameters in a plurality of sidelink DRX configurations in the plurality of sidelink DRX configurations are the smallest or the largest, the processing unit 1910 is configured to determine one of the plurality of sidelink DRX configurations as the first sidelink DRX configuration.

In a possible implementation, in a case in which values of first parameters in a plurality of sidelink DRX configurations in the at least two sidelink DRX configurations are smallest values or largest values, the processing unit 1910 is configured to select, as the first sidelink DRX configuration from the plurality of sidelink DRX configurations, a sidelink DRX configuration positioned first or last in a sidelink DRX configuration list.

In a possible implementation, in a case in which values of first parameters in a plurality of sidelink DRX configurations in the at least two sidelink DRX configurations are smallest values or largest values, the processing unit 1910 is configured to select, as the first sidelink DRX configuration from the plurality of sidelink DRX configurations, a sidelink DRX configuration corresponding to a PQI with a smallest or largest value.

In a possible implementation, in a case in which values of first parameters in a plurality of sidelink DRX configurations in the at least two sidelink DRX configurations are smallest values or largest values, the processing unit 1910 is configured to: select, as the first sidelink DRX configuration from the plurality of sidelink DRX configurations, a sidelink DRX configuration corresponding to a PQI with a smallest or largest index; or select, as the first sidelink DRX configuration from the plurality of sidelink DRX configurations, a sidelink DRX configuration corresponding to a sidelink QoS profile with a smallest or largest index.

In a possible implementation, the first sidelink DRX configuration is determined based on at least one of the following parameters: positions of the at least two sidelink DRX configurations separately in a sidelink DRX configuration list, values of PQIs respectively corresponding to the at least two sidelink DRX configurations, indexes of sidelink QoS profiles respectively corresponding to the at least two sidelink DRX configurations, or indexes of PQIs respectively corresponding to the at least two sidelink DRX configurations.

In a possible implementation, the first sidelink DRX configuration is generated based on the at least two sidelink DRX configurations, and a value of a parameter in the first sidelink DRX configuration comes from one or more sidelink DRX configurations in the at least two sidelink DRX configurations.

In a possible implementation, a value of a first parameter included in the first sidelink DRX configuration is a smallest value or a largest value in values of first parameters respectively included in the at least two sidelink DRX configurations.

In a possible implementation, the sidelink DRX configurations for use are the at least two sidelink DRX configurations.

In a possible implementation, each of the at least two sidelink DRX configurations includes duration of one or more of the following timers: an sl-DRX-onDurationTimer, an sl-DRX-inactivityTimer, an sl-DRX-HARQ-RTT-Timer, or an sl-DRX-RetransmissionTimer. A sidelink active time corresponding to the terminal includes one or a union set of the following plurality of running times: a running time of the sl-DRX-onDurationTimer corresponding to each sidelink DRX configuration, a running time of the sl-DRX-inactivityTimer corresponding to each sidelink DRX configuration, or a running time of the sl-DRX-RetransmissionTimer corresponding to each sidelink DRX configuration.

In a possible implementation, each of the at least two sidelink DRX configurations includes duration of one or more of the following timers: an sl-DRX-onDurationTimer, an sl-DRX-inactivityTimer, an sl-DRX-HARQ-RTT-Timer, or an sl-DRX-RetransmissionTimer. A sidelink active time corresponding to the terminal includes one or a union set of the following plurality of running times: a running time of the sl-DRX-onDurationTimer corresponding to each sidelink DRX configuration, a running time of a first sl-DRX-inactivityTimer corresponding to a second sidelink DRX configuration, or a running time of a first sl-DRX-RetransmissionTimer corresponding to a third sidelink DRX configuration. The second sidelink DRX configuration and the third sidelink DRX configuration are separately one of the at least two sidelink DRX configurations.

In a possible implementation, a value of the first sl-DRX-inactivityTimer is a smallest value or a largest value in values of the sl-DRX-inactivityTimers respectively corresponding to the at least two sidelink DRX configurations; and/or a value of the first sl-DRX-RetransmissionTimer is a smallest value or a largest value in values of the sl-DRX-RetransmissionTimers respectively corresponding to the at least two sidelink DRX configurations.

In a second embodiment, the processing unit 1910 is configured to: obtain configuration information, where the configuration information includes an index of a PQI corresponding to at least one sidelink DRX configuration; and determine, based on an index of a first PQI and the index of the PQI corresponding to the at least one sidelink DRX configuration, a first sidelink DRX configuration corresponding to the index of the first PQI.

In a possible implementation, the processing unit 1910 is configured to: determine the first PQI corresponding to a terminal; and determine the index of the first PQI based on the first PQI.

In a possible implementation, in a case in which the PQI is a standardized PQI, the index of the PQI is a value of the standardized PQI; or the index of the PQI is an index of a sidelink QoS profile including the standardized PQI.

In a possible implementation, in a case in which the PQI is a standardized PQI, the processing unit 1910 is configured to obtain at least one non-standardized PQI. Each non-standardized PQI corresponds to one piece of indication information, and the indication information indicates a standardized PQI corresponding to a same sidelink DRX configuration as the non-standardized PQI; or each non-standardized PQI corresponds to one default sidelink DRX configuration; or each non-standardized PQI corresponds to one common sidelink DRX configuration.

In a possible implementation, in a case in which the PQI is a non-standardized PQI, the index of the PQI is an index of a sidelink QoS profile including the non-standardized PQI; or the index of the PQI is an index of the non-standardized PQI included in a sidelink RB configuration; or the index of the PQI is indicated by an index of a sidelink RB configuration corresponding to a sidelink QoS profile including the non-standardized PQI and an index of the non-standardized PQI in the sidelink RB configuration.

In a third embodiment, the processing unit 1910 is configured to: obtain configuration information, where the configuration information includes an index of a sidelink QoS profile corresponding to at least one sidelink DRX configuration; and determine, based on an index of a first sidelink QoS profile and the index of the sidelink QoS profile corresponding to the at least one sidelink DRX configuration, a first sidelink DRX configuration corresponding to the index of the first sidelink QoS profile.

In a possible implementation, the processing unit 1910 is configured to: determine the first sidelink QoS profile corresponding to a terminal; and determine the index of the first sidelink QoS profile based on the first sidelink QoS profile.

In a possible implementation, the index of the sidelink QoS profile is indicated by a position of the sidelink QoS profile in sidelink QoS profiles corresponding to a sidelink RB configuration list; or the index of the sidelink QoS profile is indicated by an index of a sidelink RB configuration corresponding to the sidelink QoS profile and a position of the sidelink QoS profile in sidelink QoS profiles corresponding to the sidelink RB configuration.

In a fourth embodiment, the processing unit 1910 is configured to: obtain configuration information, where the configuration information includes an index of a sidelink RB configuration corresponding to at least one sidelink DRX configuration, and each sidelink RB configuration corresponds to at least one PQI; and determine, based on a first PQI and the index of the sidelink RB configuration corresponding to the at least one sidelink DRX configuration, a first sidelink DRX configuration corresponding to the first PQI.

In a possible implementation, the processing unit 1910 is configured to: determine an index of a first sidelink RB configuration corresponding to the first PQI; and determine, based on the index of the first sidelink RB configuration and the index of the sidelink RB configuration corresponding to the at least one sidelink DRX configuration, the first sidelink DRX configuration corresponding to the index of the first sidelink RB configuration.

In a possible implementation, the index of the first sidelink RB configuration is indicated by a position of the first sidelink RB configuration in a sidelink RB configuration list.

In a fifth embodiment, the processing unit 1910 is configured to: obtain configuration information, where the configuration information includes an index of a sidelink RB configuration corresponding to at least one sidelink DRX configuration, and each sidelink RB configuration corresponds to at least one sidelink QoS profile; and determine, based on a first sidelink QoS profile and the index of the sidelink RB configuration corresponding to the at least one sidelink DRX configuration, a first sidelink DRX configuration corresponding to the first sidelink QoS profile.

In a possible implementation, the processing unit 1910 is configured to: determine an index of a first sidelink RB configuration corresponding to the first sidelink QoS profile; and determine, based on the index of the first sidelink RB configuration and the index of the sidelink RB configuration corresponding to the at least one sidelink DRX configuration, the first sidelink DRX configuration corresponding to the index of the first sidelink RB configuration.

In a possible implementation, the index of the first sidelink RB configuration is indicated by a position of the first sidelink RB configuration in a sidelink RB configuration list.

For more detailed descriptions about the processing unit 1910 and the transceiver unit 1920, refer to related descriptions in Embodiment 1 to Embodiment 9 directly. Details are not described herein again.

As shown in FIG. 20, a communication apparatus 2000 includes a processor 2010 and an interface circuit 2020. The processor 2010 and the interface circuit 2020 are coupled to each other. It can be understood that the interface circuit 2020 may be a transceiver or an input/output interface. Optionally, the communication apparatus 2000 may further include a memory 2030, configured to store instructions executed by the processor 2010, or store input data required for running instructions by the processor 2010, or store data generated after the processor 2010 runs instructions.

When the communication apparatus 2000 is configured to implement Embodiment 1 to Embodiment 11, the processor 2010 is configured to implement functions of the processing unit 1910, and the interface circuit 2020 is configured to implement functions of the transceiver unit 1920.

When the communication apparatus is a chip used in a terminal, the chip in the terminal implements functions of the terminal in Embodiment 1 to Embodiment 11 and functions of the terminal in another embodiment. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

It can be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented by using hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist as discrete components in a base station or a terminal.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs and instructions. When the computer program or instructions are loaded and executed on a computer, all or some of the procedures or functions in embodiments of this application are executed. The computer may be a general-purpose computer, a dedicated computer, a computer network, a base station, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state drive. The computer-readable storage medium may be a volatile or nonvolatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A method for determining a sidelink discontinuous reception DRX configuration, comprising:
determining at least two PQIs or sidelink quality of service QoS profiles corresponding to a service of a terminal;
determining at least two sidelink DRX configurations corresponding to the at least two PQIs or sidelink QoS profiles, wherein each sidelink DRX configuration indicates one or more sidelink DRX parameters; and
determining a sidelink DRX configuration for use based on the at least two sidelink DRX configurations.

2. The method according to claim 1, wherein the sidelink DRX configuration for use is a first sidelink DRX configuration, and the first sidelink DRX configuration is one of the at least two sidelink DRX configurations.

3. The method according to claim 2, wherein a value of a first parameter in the first sidelink DRX configuration is a smallest value or a largest value in values of first parameters in the at least two sidelink DRX configurations; and
the first parameter is any one of the following parameters: a value of a sidelink DRX on-duration timer sl-DRX-OnDurationTimer, a value of a sidelink DRX inactivity timer sl-DRX-InactivityTimer, a value of a sidelink DRX hybrid automatic repeat request round trip time timer sl-DRX-HARQ-RTT-Timer, a value of a sidelink DRX retransmission timer sl-DRX-RetransmissionTimer, a value of a sidelink DRX cycle SL DRX cycle, a value of a sidelink DRX start offset sl-DRX-startOffset, or a value of a sidelink DRX slot offset sl-DRX-slotOffset.

4. The method according to claim 3, wherein in a case in which values of first parameters in a plurality of sidelink DRX configurations in the at least two sidelink DRX configurations are smallest values or largest values,
when a value of a second parameter in only one sidelink DRX configuration in the plurality of sidelink DRX configurations is the smallest or the largest, determining the sidelink DRX configuration as the first sidelink DRX configuration; or
when values of second parameters in a plurality of sidelink DRX configurations in the plurality of sidelink DRX configurations are the smallest or the largest, determining one of the plurality of sidelink DRX configurations as the first sidelink DRX configuration.

5. The method according to claim 3, wherein in a case in which values of first parameters in a plurality of sidelink DRX configurations in the at least two sidelink DRX configurations are smallest values or largest values,
selecting a sidelink DRX configuration positioned first or last in a sidelink DRX configuration list as the first sidelink DRX configuration from the plurality of sidelink DRX configurations.

6. The method according to claim 3, wherein in a case in which values of first parameters in a plurality of sidelink DRX configurations in the at least two sidelink DRX configurations are smallest values or largest values,
selecting a sidelink DRX configuration corresponding to a PQI with a smallest or largest value as the first sidelink DRX configuration from the plurality of sidelink DRX configurations.

7. The method according to claim 3, wherein in a case in which values of first parameters in a plurality of sidelink DRX configurations in the at least two sidelink DRX configurations are smallest values or largest values,
selecting a sidelink DRX configuration corresponding to a PQI with a smallest or largest index as the first sidelink DRX configuration from the plurality of sidelink DRX configurations; or
selecting a sidelink DRX configuration corresponding to a sidelink QoS profile with a smallest or largest index as the first sidelink DRX configuration from the plurality of sidelink DRX configurations.

8. The method according to claim 2, wherein the first sidelink DRX configuration is determined based on at least one of the following parameters:
positions of the at least two sidelink DRX configurations separately in a sidelink DRX configuration list;
values of PQIs respectively corresponding to the at least two sidelink DRX configurations;
indexes of sidelink QoS profiles respectively corresponding to the at least two sidelink DRX configurations; or
indexes of PQIs respectively corresponding to the at least two sidelink DRX configurations.

9. The method according to claim 1, wherein
the first sidelink DRX configuration is generated based on the at least two sidelink DRX configurations, and a value of a parameter in the first sidelink DRX configuration comes from one or more of the at least two sidelink DRX configurations.

10. The method according to claim 9, wherein a value of a first parameter comprised in the first sidelink DRX configuration is a smallest value or a largest value in values of first parameters respectively comprised in the at least two sidelink DRX configurations.

11. The method according to claim 1, wherein
the sidelink DRX configurations for use are the at least two sidelink DRX configurations.

12. The method according to claim 11, wherein each of the at least two sidelink DRX configurations comprises duration of one or more of the following timers: an sl-DRX-onDurationTimer, an sl-DRX-inactivityTimer, an sl-DRX-HARQ-RTT-Timer, or an sl-DRX-RetransmissionTimer; and
a sidelink active time corresponding to the terminal comprises one or a union set of the following plurality of running times: a running time of the sl-DRX-onDurationTimer corresponding to each sidelink DRX configuration, a running time of the sl-DRX-inactivityTimer corresponding to each sidelink DRX configuration, or a running time of the sl-DRX-RetransmissionTimer corresponding to each sidelink DRX configuration.

13. The method according to claim 11, wherein each of the at least two sidelink DRX configurations comprises duration of one or more of the following timers: an sl-DRX-onDurationTimer, an sl-DRX-inactivityTimer, an sl-DRX-HARQ-RTT-Timer, or an sl-DRX-RetransmissionTimer; and
a sidelink active time corresponding to the terminal comprises one or a union set of the following plurality of running times: a running time of the sl-DRX-onDurationTimer corresponding to each sidelink DRX configuration, a running time of a first sl-DRX-inactivityTimer corresponding to a second sidelink DRX configuration, or a running time of a first sl-DRX-RetransmissionTimer corresponding to a third sidelink DRX configuration, wherein
the second sidelink DRX configuration and the third sidelink DRX configuration are separately one of the at least two sidelink DRX configurations.

14. The method according to claim 13, wherein
a value of the first sl-DRX-inactivityTimer is a smallest value or a largest value in values of the sl-DRX-inactivityTimers respectively corresponding to the at least two sidelink DRX configurations; and/or
a value of the first sl-DRX-RetransmissionTimer is a smallest value or a largest value in values of the sl-DRX-RetransmissionTimers respectively corresponding to the at least two sidelink DRX configurations.

15. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 14 by using a logic circuit or by executing code instructions.

16. A computer program product, comprising a computer program, wherein when the computer program is executed by a processor, the method according to any one of claims 1 to 14 is implemented.

17. A computer-readable storage medium, wherein the storage medium stores a computer program or instructions, and when the computer program or the instructions is/are executed by a processor, the method according to any one of claims 1 to 14 is implemented.
